(19) Europäisches Patentamt
European Patent Office
Office européen des brevets

(11) EP 1 586 153 B1

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(21) Anmeldenummer: **03799479.5**

(22) Anmeldetag: **13.12.2003**

(51) Int Cl.:
***H02J 5/00*** *(2006.01)* ***H02M 3/335*** *(2006.01)*
*H01L 41/04 (2006.01)* *B64C 27/00 (2006.01)*

(86) Internationale Anmeldenummer:
**PCT/EP2003/014214**

(87) Internationale Veröffentlichungsnummer:
**WO 2004/066481 (05.08.2004 Gazette 2004/32)**

(54) **VORRICHTUNG UND VERFAHREN ZUM UBERTRAGEN UND BEREITSTELLEN DER ENERGIE KAPAZITIVER AKTUATOREN**

DEVICE AND METHOD FOR TRANSMITTING AND PROVING THE ENERGY OF CAPACITIVE ACTUATORS

DISPOSITIF ET PROCEDE PERMETTANT DE TRANSMETTRE ET DE METTRE A DISPOSITION L'ENERGIE D'ACTIONNEURS CAPACITIFS

(84) Benannte Vertragsstaaten:
**DE GB IT**

(30) Priorität: **20.01.2003 DE 10301978**

(43) Veröffentlichungstag der Anmeldung:
**19.10.2005 Patentblatt 2005/42**

(73) Patentinhaber: **EUROCOPTER DEUTSCHLAND GmbH**
**86609 Donauwörth (DE)**

(72) Erfinder:
- **SEELIG, Anton**
**65439 Flörsheim (DE)**
- **REINERS Dieter**
**64342 Seeheim-Jugenheim (DE)**
- **LUTHER Jürgen**
**64289 Darmstadt (DE)**

(74) Vertreter: **GPI & Associés**
**1330, rue Guillibert de la Lauzière**
**EuroParc de Pichaury, Bât B2**
**13856 Aix en Provence Cedex 3 (FR)**

(56) Entgegenhaltungen:
**WO-A-00/48299**
**DE-A- 19 927 190**
**US-A- 4 953 068**
**US-A1- 2002 141 867**
**US-B1- 6 181 235**
**US-B1- 6 227 204**
**US-B1- 6 301 128**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Vorrichtung zur berührungslosen elektrischen Energieübertragung und/ oder Kontrolleinrichtung in einem System, umfassend mindestens ein stationäres und ein bewegbares Teil, zwischen denen Energie zu übertragen ist, mit mindestens einem zu steuernden und mit Energie zu versorgenden Mittel im bewegbaren Teil, wobei ein eihenschwingkreiskondensator eines Frequenzgenerators an eine Primärwicklung eines eine Trennstelle zwischen dem stationären Teil und dem bewegbaren Teil überbrückenden induktiven Übertragers angeschlossen ist.

In derartigen Systemen müssen bei entsprechendem Bedarf elektrische Energie und Steuersignale vom stationären Teil des Systems in den bewegten Teil des Systems übertragen werden, weil im bewegten Teil zumindest eine Einrichtung, beispielsweise eine Stelleinrichtung, angeordnet ist, die im Betriebsfall mit Energie versorgt werden muss und die funktionsbedingt gesteuert werden muss. Alternativ sind hier auch Systeme in Betracht zu ziehen, bei denen Stelleinrichtungen, wie beispielsweise kapazitive Aktuatoren, über eine bestimmte Entfernung hin betätigt werden müssen.

Aus der Literatur, siehe z. B. : A. Esser, "A New Approach to Synchronize a Bidirektional DC to DC Converter for Contactless Power Supplies", ETEP Vol. 3, No. 2, March/April 1993, ist ein Verfahren und eine Anordnungen bekannt, welche die bidirektionale Übertragung elektrischer Energie über Robotergelenke mit beliebig großem Drehwinkel ermöglicht, ohne dass eine elektrisch leitende Verbindung über das Drehgelenk hinweg erforderlich ist. Hierzu wird auf der Eingangsseite des Gelenkes aus einer Gleichspannung mittels eines Wechselrichters eine höherfrequente Wechselspannung gebildet, diese Wechselspannung mittels eines induktiven Übertragers von einer Primärsspule des Übertragers auf der einen Seite einer Trennstelle, d. h. eines Luftspaltes, auf eine Sekundärspule, die auf der anderen Seite der Trennstelle liegt, übertragen und dort wieder in eine Gleichspannung zurückgewandelt. Die dabei eingesetzten Gleichspannungs-/ Wechselspannungswandler und Wechselspannungs/Gleichspannungswandler sind als Wechselrichter ausgebildet, so dass sie bidirektional betreibar sind und dadurch der Energiefluss umkehrbar ist. Ein Kondensator, der hinter der Trennstelle auf der Sekundärseite aufgeladen wurde, kann entladen werden, indem die Energie wieder über die Trennstelle auf die Primärseite zurückübertragen wird.

Grundsätzlich sind auch Stelleinrichtungen bekannt. Als Beispiel sei hier das Piezo-Element genannt, das als kapazitiver Aktuator in Automobilen, Fluggeräten oder anderen technischen Geräten dort eingesetzt wird, wo mit hoher Frequenz und mittlerer Stellkraft Bauteile zu bewegen sind. Dies kann sowohl in der Anordnung einzelner Stellglieder erfolgen, als auch in der Form von Gruppen mehrerer Stellglieder. Die DE 199 27 087 A1 beschreibt zum letztgenannten Fall ein Verfahren und eine Vorrichtung zum Laden und Entladen mehrerer piezoelektrischer Elemente. Mittels in geeigneter Weise angesteuerter Lade- und Entladeschalter können jeweils ein oder mehrere piezoelektrische Elemente umfassende Gruppen unabhängig voneinander geladen oder entladen werden. Bei dem Energieaustausch zwischen dem sekundärseitigen Kondensator, der als Pufferkondensator eine größere Kapazität als die Piezoelemente aufweist, wobei beide Kapazitäten im allgemeinen auf unterschiedliche Spannungen aufgeladen sind, wird der Lade- und Entladestrom in seinem Anstieg durch eine Spule begrenzt und durch periodisches Schalten, auch Takten genannt, in seiner Höhe eingestellt. Dieses Takten erfolgt durch Ein- und Ausschalten von Halbleiterschaltern mit hoher Frequenz, wobei der in einer Spule 2 gespeicherte Lade- oder Entladestrom beim Schalten in den Halbleitern eine hohe Schaltverlustleistung erzeugt. Ein weiterer Nachteil dieses Verfahrens und dieser Anordnung besteht in der doppelten Wandlung und der Speicherung der Energie auf dem bewegten System. Die über die Trennstelle, d.h. den Luftspalt, induktiv übertragene Wechselspannung bzw. der induktiv übertragene Wechselstrom werden auf dem bewegten System gleichgerichtet und die Energie in einer in der Regel als Elektrolytkondensator ausgebildeten Pufferkapazität, die noch wesentlich größer als die Kapazität der Piezoelemente ist, gespeichert. Aus der Pufferkapazität werden dann ein oder mehrere Piezoelemente mit bei hoher Frequenz getaktetem Strom aufgeladen. Wünschenswert ist dagegen ein Verfahren, das die mit höherfrequenter Spannung bzw. mit höherfrequentem Strom über die Trennstelle übertragene Energie ohne Zwischenspeicherung den piezoelektrischen Elementen zuführt.

Der Druckschrift ist jedoch kein Hinweis entnehmbar, auf welche Weise die Ansteuerung der piezoelektrischen Elemente erfolgen soll, insbesondere wenn letztere auf dem bewegbaren Teil eines aus einem stationären und einem bewegbaren Teil bestehenden Systems angeordnet sind. Weiterhin ergibt sich bei besonderen bewegten System, die Erschütterungen und/oder hohen Geschwindigkeiten ausgesetzt sind, das Problem, dass bestimmte elektrische Bauteile nicht mehr für diese Betriebsbedingungen geeignet sind. Geht man beispielsweise von einer Anwendung der Vorrichtung im Bereich der Rotorachse und des Rotorkopfes eines Hubschraubers aus, so ist die Verwendung von Elektrolytkondensatoren aus Gründen der hohen mechanischen Belastung prinzipbedingt nicht möglich. Gerade bei Anwendungen mit rauen Umgebungsbedingungen, wie hohen und tiefen Temperaturen und großen Zentrifugalbeschleunigungen auf dem bewegten System, beispielsweise dem Rotorkopf eines Hubschraubers, ist ein Betrieb mit Elektrolytkondensatoren nur bei erheblichen Risiken möglich.

Die WO-A-0048299 beschreibt eine Vorrichtung zur Konvertierung höherer Spannungen, wie sie beispielsweise bei Eisenbahnen oder Straßenbahnen Verwendung finden, in niedrige Gleich- oder Wechselspannungen, wie sie zum Betrieb von Beleuchtungen oder Klimaanlagen benötigt werden. Hierzu wird ein Transformator verwendet, der in bekannter Art den Primär- und den Sekundärkreis voneinander galvanisch trennt. Es ist jedoch nicht vorgesehen, Energie und Kontrollsignale von einem statischen auf einen rotierenden Teil eines Systems zu übertragen oder gar mit Hilfe der übertragenen Signale auf dem rotierenden Teil des Systems eine Aktuatorstelleinrichtung zu betreiben.

Schließlich zeigt die US-A-5709291 eine Vorrichtung, bei der kontaktlos Energie auf ein bewegbares Gerät, wie beispielsweise eine von einer Arbeitsstation zur nächsten fahrenden Palette, übertragen wird. Hierfür wird ein schienenförmiger Übertrager verwendet, der lineare Bewegungen des bewegbaren Geräts zulässt. Die mittels dieses Übertragers auf das bewegbare Gerät übertragenen Spannung wird zunächst gleichgerichtet und zum Laden einer auf dem bewegbaren Gerät mitgeführten Batterie verwendet. Aus der Batterie wird ein auf dem bewegbaren Gerät mitgeführter Motor gespeist. Eine Beeinflussung der Motorsteuerung unter Zuhilfenahme des Übertragers ist nicht beschrieben. Darüber hinaus ist dieses System zur Anwendung im Bereich der Rotorachse und des Rotorkopfes eines Hubschraubers ungeeignet, weil die Verwendung von Batterien im Bereich des Rotorkopfes aus Gewichts- und Platzgründen nicht möglich ist. Anforderungen an einen großen nutzbaren Temperaturbereich und die Resistenz gegenüber hohen Zentrifugalbeschleunigungen lassen sich bei der Verwendung von Batterien nicht erfüllen.

Der Erfindung liegt deshalb die Aufgabe zugrunde, ein Verfahren und eine Vorrichtung zur Energieversorgung und Steuerung von kapazitiven Aktuatoren anzugeben, welche einerseits die Ansteuerung der Aktuatoren über eine bestimmte Entfernung erlauben und welche andererseits die Übertragung der Energie der auf dem bewegbaren Teil des Systems angeordneten Aktuatoren auf das durch eine Trennstelle getrennte bewegbare Teil ermöglichen und die Energie den auf dem bewegbaren Teil angeordneten Aktuatoren nach Maßgabe der gewünschten Kraftwirkungen oder der beabsichtigten Bewegungen zuführen, ohne dass eine Zwischenspeicherung der Energie in einem Elektrolytkondensator auf dem bewegbaren Teilsystem erforderlich ist.

Die Aufgabe wird durch die in den Ansprüchen 1, 11 wiedergegebenen kennzeichnenden Merkmale in hervorragender Weise gelöst. Vorteilhafte Ausgestaltungen ergeben sich aus den kennzeichnenden Merkmalen der nachbezogenen Ansprüche 2-10.

Die Erfindung wird an Hand der in den Figuren 1 bis 7 schematisch vereinfacht dargestellten Ausführungsbeispielen näher erläutert. Es zeigen:

Fig. 1: eine schematische Anordnung zur Durchführung des Verfahrens mit einem stationären Frequenzgenerator 2, einem eine Trennstelle überbrückenden induktiven Übertrager 3, einer Aktuatorstelleinrichtung 4 und einem kapazitiven Aktuator 5 mit einem Stapel 5a piezoelektrischen Materials,

Fig. 2: ein beispielhaftes Schaltprinzip für die schematische Anordnung nach Fig. 1,

Fig. 3: Diagramme a) bis e) und Schaltzustände 1 - 6 der Aktuatorstelleinrichtung 4,

Fig. 4: erläutert Schaltprinzip und Wirkungsweise des Leistungskernes 4c einer Aktuatorstelleinrichtung 4 mit bipolarer Ausgangspannung $u'_A$.

Fig. 5: ein Ausführungsbeispiel mit einer Aktuatorstelleinrichtung 4 mit beliebiger Ausgangsspannung,

Fig. 6: eine schematische Anordnung eines Doppelaktuators mit zwei Stapeln 5a, 5b, piezoelektrischen Materials,

Fig. 7: ein Beispiel mit 4 Doppelaktuatoren an einer gemeinsamen Energiezufuhr,

Fig. 8: die erfindungsgemäße Vorrichtung zur Energieübertragung im Bereich der Rotorwelle und der Rotorblätter eines Drehflügelflugzeugs,

Fig. 9: einen Schnitt durch eine Vorrichtung zur Energieübertragung im Bereich der Rotorwelle.

Die schematische Anordnung der Erfindung in Fig.1 zeigt einen stationären Frequenzgenerator 2, der aus einer Gleichspannungsquelle 1, die eine Batterie oder ein auf Geichspannung geladener Kondensator sein kann, einen Wechselstrom $i_G$ höherer Frequenz von beispielsweise 100 kHz generiert, der eine von der Amplitude und der Phasenlage der Gegenspannung $u_G$ unabhängige Amplitude $i_G$ aufweist. Ein derartiger Generator kann je nach der Phasenlage der Gegenspannung Wirk- und Blindleistung abgeben und aufnehmen.

Um die Leistung bzw. die Energie über die Trennstelle 3c zu mindestens einem Aktuator 5 auf dem bewegbaren Teilsystem zu transportieren, wird der Wechselstrom $i_G$ der Primärwicklung 3a eines die Trennstelle überbrückenden induktiven Übertragers 3 zugeführt. Auf dem bewegbaren Teilsystem ist die Sekundärwicklung 3b des Übertragers mit einer elektronischen Stelleinrichtung 4, die als Aktuatorstelleinrichtung wirkt und in der Regel einer Stromrichterschaltung entspricht, verbunden. Ist das bewegbare Teilsystem drehbar, so kann der Übertrager 3 ein dem Stand der Technik entsprechender induktiver Drehübertrager sein, dessen Primärteil im Drehpunkt der Bewegung befestigt und dessen Sekundärteil im Drehpunkt drehbar gelagert ist. Die zu überbrückende Trennstelle verläuft in diesem Fall als Luftspalt im Inneren des Drehübertragers. Für lineare

Bewegungen stehen ebenfalls Linearübertrager zur Überbrückung einer entlang der Bewegungsstrecke verlaufenden Trennstelle zur Verfügung. Der aus der Sekundärwicklung 3b des Übertragers entsprechend dessen Übersetzungsverhältnisses austretende Strom i wird über eine elektronische Aktuatorstelleinrichtung 4, getrennt nach positiven und negativen Halbschwingungen oder Abschnitten aus diesen Halbschwingungen, stets in der Richtung in den kapazitiven Aktuator eingeprägt, in der der Betrag des Unterschiedes $u_S - u_A$ eines Spannungssollwertes $u_S$ und der aktuellen Aktuatorspannung $u_A$ von Halbschwingung zu Halbschwingung abnimmt. Ist der Spannungsunterschied $u_S - u_A$ zu Null geworden oder liegt dieser innerhalb eines als Null akzeptierten Toleranzbandes, leitet die Aktuatorstelleinrichtung 4 den Strom i an dem Aktuator 5 über einen Kurzschluss der Zuleitungen zur Aktuatorstelleinrichtung vorbei. Dieser Kurzschluss ist bei eingeprägtem Strom i völlig unkritisch.

Der kapazitive Aktuator 5 wandelt die beim Aufbringen einer Ladung $\int i_A\, dt$ auf einen Stapel 5a piezoelektrischen Materials auftretende Längenänderung $\Delta s$ über eine mechanische Übersetzung 5c in eine Winkeländerung einer Klappe 6 um.

Das erfindungsgemäße Verfahren ermöglicht mit dem zur Übertragung über den induktiven Übertrager 3 zwingend erforderlichen höherfrequenten Wechselstrom i und mittels der Aktuatorstelleinrichtung 4 den Stapel 5a piezoelektrischen Materials zu laden oder zu entladen, ohne dass ein Energiespeicher in Form eines Elektrolytkondensators auf dem bewegten System erforderlich ist.

Es ist offensichtlich, dass das erfindungsgemäße Verfahren auch dann zum Einstellen der Energie kapazitiver Aktuatoren angewendet werden kann, wenn nicht die Aufgabe besteht, eine Trennstelle mit Hilfe eines induktiven Übertragers zu überbrücken.

Bei Vorhandensein der Trennstelle müssen in der Regel auch die Sollwerte $u_S$ der Aktuatorspannung, die beispielsweise in einem Leitsystem LS als bitserielle Datenworte generiert werden, über die Trennstelle 3c der Aktuatorstelleinrichtung 4 zugeführt werden. In dem Ausführungsbeispiel der Fig.1 werden diese mittels einer optischen oder ebenfalls induktiven, nach dem Stand der Technik ausgebildeten Datenübertragungseinrichtung DÜ über die Trennstelle übertragen und auf dem bewegbaren Teilsystem mittels eines Datenwandlers DW in die für die Aktuatorstelleinrichtung geeigneten Sollwerte $u_S$ gewandelt.

In Fig 2 sind eine beispielhafte Ausführung des erfindungsgemäßen Frequenzgenerators 2 und der Aktuatorstelleinrichtung 4 dargestellt. Der Frequenzgenerator 2 ist ein Wechselrichter und besteht aus einer Brükkenschaltung abschaltbarer Halbleiterleistungsschalter T1-T4, beispielsweise MOS-Feldeffekt-Transistoren oder IGBTs, mit einem Reihenschwingkreis $L_G$, $C_G$ in der Brückendiagonalen und einer an den Kondensator $C_G$ über den Übertrager 3 angekoppelten Last. Bei Übereinstimmung der Wechselrichterfrequenz $f_w$, die ein in der Wechselrichtersteuerung 2a enthaltener Oszillator erzeugt, mit der Resonanzfrequenz des Reihenschwingkreises

$$f_G = \frac{1}{2\pi\sqrt{L_G C_G}}$$

wird in den an den Kondensator angeschlossenen Übertrager 3 ein von der Gegenspannung $u_G$ und damit von der angeschlossenen Last unabhängiger Strom $i_G$ mit der konstanten Amplitude

$$\hat{i}_G = \hat{u}_{W1} \cdot \sqrt{\frac{C_G}{L_G}}$$

eingeprägt. In dieser Gleichung ist $\hat{u}_{W1}$ die Grundschwingungsamplitude der Wechselrichterspannung $u_W$, die bei schwankender Eingangsgleichspannung $U_B$ durch die in der Wechselrichtersteuerung 2a enthaltene Pulsweitenmodulation auf einem konstanten Wert gehalten wird. Die Ausgangsstromamplitude $\hat{i}_G$ des Frequenzgenerators 2 ist sowohl von der Höhe der Gegenspannung $u_G$ als auch von deren Phasenlage zum Strom $i_G$ unabhängig. Der Frequenzgenerator 2 kann daher bei konstantem Strom $\hat{i}_G$ nicht nur Wirk- und Blindleistung über den Übertrager 3 an den bewegbaren Sekundärteil liefern, sondern auch von diesem aufnehmen und die aufgenommene Wirkleistung der Gleichspannungsquelle $U_B$ zuführen.

Die Brückenschaltung der Halbleiterleistungsschalter T1 - T4 kann, wie aus der allgemeinen Lehre der Stromrichtertechnik bekannt ist, durch funktionsgleiche Halbbrückenschaltungen mit kapazitivem Eingangspannungsteiler oder Transformator-Mittelpunktschaltungen ersetzt werden.

Die Höhe der Gegenspannung $u_G$ und deren Phasenlage und somit die Richtung des Energieflusses werden durch die an die Sekundärwicklung 3b des Übertragers 3 angeschlossene Aktuatorstelleinrichtung 4 bestimmt. Diese enthält als Stelleinrichtung 4a ebenfalls eine Brückenschaltung von Halbleiterleistungsschaltern S1-S4, denen noch Beschaltungskondensatoren $C_B$ parallelgeschaltet sind, auf deren Funktion weiter unten eingegangen wird. Am Ausgang der Brückenschaltung zum Aktuator 5 hin liegt ein Filter $C_F$, $L_F$, und in die Zuleitung des höherfrequenten Wechselstromes i zur Brückenschaltung ist ein Filter $C_L$, $L_L$ geschaltet.

Das Filter $C_F$, $L_F$ dient der Begrenzung der hochfrequenten Welligkeit des Stromes $i_A$ zum Aktuator 5. Da die Aktuatorspannung $u_A$ über die Stelleinrichtung 4 nur mit einer Frequenz von z. B. maximal 500 Hz verstellt wird, die Frequenz der Stromwelligkeit von $i_A$ aber

den doppelten Wert der Frequenz $f_w$, also beispielsweise 200 kHz aufweist, ist das Filter so ausgelegt, daß zwischen der niederfrequenten Aktuatorspannung $u_A$ und dem niederfrequenten Spannungsanteil von $u'_A$ an dem Filterkondensator $C_F$ kein nennenswerter Unterschied besteht. Der Spannungsunterschied $u'_A$ - $u_A$, der an der Filterinduktivität $L_F$ auftritt, ist die hochfrequente Spannungswelligkeit von beispielsweise 200 kHz.

Das als Reihenschwingkreis ausgebildete und auf die Frequenz $f_w$ des Frequenzgenerators 2 bzw. des Stromes i abgestimmte Filter $C_L$, $L_L$ ist ein Saugkreis, der für den Strom i keinen Widerstand darstellt. Die Induktivität $L_L$ dieses Filters nimmt die beim Schalten der Leistungsschalter S1-S4 sprunghaft auftretenden Spannungsunterschiede zwischen der von dem Kondensator $C_G$ auf die sekundäre Übertragerwicklung 3b übertragenen Spannung $u'_G$ und der niederfrequenten Ausgangsspannung $u'_A \approx u_A$ der Aktuatorstelleinrichtung 4 auf.

Um die Aktuatorspannung $u_A$ bzw. $u'_A$, die ein Maß für die in dem piezoelektrischen Material 5a gespeicherte Ladung $\int i_A dt$ und damit auch der Längenänderung $\Delta s$ ist, den zeitlich veränderlichen Sollwerten $u_s$ nachzuführen, ist eine Regelung $4_R$ vorhanden, deren Ausgangssignale $\varphi$ und G/W die Steuerung $4_{ST}$ der Aktuatorstelleinrichtung in der Weise beeinflussen, dass der der Aktuatorstelleinrichtung zugeführte Strom i getrennt nach positiven und negativen Halbschwingungen oder Abschnitten aus diesen Halbschwingungen in der Richtung in den kapazitiven Aktuator eingeprägt wird, dass der Betrag des Unterschiedes $u_S$-$u_A$ abnimmt. Ist dieser Unterschied positiv, d.h. $u_S>u_A$, muss dem Aktuator weitere Ladung zugeführt werden. Das ist identisch mit einem Energiefluss von der höherfrequenten Wechselstromseite zu der nur niederfrequent veränderlichen Gleichspannungsseite mit den Spannungen $u'_A$ bzw. $u_A$. Zu diesem Zweck wird die Steuerung $4_{ST}$ über das Signal G/W veranlasst, die Brückenschaltung S1-S4 als Gleichrichter zu steuern. Das Signal $\varphi$ ist ein Maß für die Größe der Abweichung $u_S$-$u_A$ und bestimmt, wie an Hand der Fig. 3 noch ausführlicher erläutert wird, der Größe des Winkels der Halbschwingungsabschnitte.

Bei negativer Abweichung $u_S$-$u_A$, d.h. $u_S<u_A$, wird dem Aktuator Ladung bzw. Energie entzogen und über die Aktuatorstelleinrichtung 4 in den von dem höherfrequenten Strom i durchflossenen Energieübertragungskreis eingespeist. Die Steuerung $4_{ST}$ steuert nun, veranlasst durch das Signal G/W, die Brückenschaltung S1-S4 als Wechselrichter, wobei das Signal $\varphi$ wiederum entsprechend der Größe der Abweichung $u_S$-$u_A$ die Größe des Winkels der Halbschwingungsabschnitte bestimmt.

Die Bildung der Halbschwingungsabschnitte des Stromes i erfolgt durch Ein- und Ausschalten der Halbleiterschalter S1-S4 über die Steuerung $4_{ST}$ in feinen Rasterschritten synchron zum Schwingungsverlauf. Zu diesem Zweck wird mittels des Stromwandlers SW und der Schaltkreise $4_{S1}$, $4_{S2}$ und $4_{S3}$ ein zu der Phasenlage des Stromes i synchrones Schaltraster SR erzeugt. In diesem Schaltraster werden die Halbleiterschalter S1 - S4 sowohl im Gleichrichter- als auch im Wechselrichterbetrieb nur in solchen Zeit- bzw. Phasenwinkelbereichen eingeschaltet, in denen der Strom i bereits über die zu jedem Schalter parallelliegende Diode fließt. Beim Einschalten der Halbleiterschalter S1-S4 wird daher Einschaltverlustleistung vermieden.

Zur Bildung des Schaltrasters SR wird das Stromsignal eines Stromwandlers SW, der den höherfrequenten Strom i erfaßt, über eine Komparatorstufe $4_{S1}$ einem ersten Phaseneingang E1 eines Phase-Lock-Loop-Schaltkreises $4_{S2}$ zugeführt. Dem zweiten Phaseneingang E2 wird ein mittels eines N-stufigen Zählers $4_{S3}$ aus dem Ausgangstakt $f_T$ des PLL-Schaltkreises um den Faktor $2^N$ untersetztes Signal $f_{TU}$ zugeführt. Der PLL-Schaltkreis $4_{S2}$ stellt die Frequenz seines Ausgangstaktes $f_T$ so ein, dass die Frequenz- und Phasenwinkelabweichung zwischen dem Stromsignal am Eingang E1 mit der Frequenz $f_w$ und dem untersetzten Signal mit der Frequenz $f_{TU}$ am Eingang E2 Null wird. Die N-Ausgangssignale SR des N-stufigen Zählers bilden dann das mit den Nulldurchgängen des Wechselstromes i synchronisierte Schaltraster SR. In dem Beispiel der Fig. 2 beträgt N=6. Bei einer Frequenz $f_w$ des Stromes i von 100 kHz hat dann das Schaltraster, in dem die Halbleiterschalter S1-S4 einmal pro 100-kHz-Periode ein- und ausgeschaltet werden, eine zeitliche Auflösung von

$$\Delta t = \frac{1}{2^6 \cdot 10^5 s^{-1}} = 156 \text{ ns.}$$

In Fig. 3 erläutern die Diagramme a) bis e) und die Schaltzustände 1 bis 6 das Einstellen des Aktuatorstromes $i_A$, d. h. das Bilden der Halbschwingungsabschnitte aus dem Strom i, für den Gleichrichter- und für den Wechselrichterbetrieb, wobei Schaltverluste beim Schalten der Halbleiterschalter S1- S4 vermieden werden.

Diagramm 3a) zeigt den Verlauf der Spannung u am wechselstromseitigen Eingang der Brückenschaltung S1- S4 in Zuordnung zu dem eingeprägten Strom i. Diagramm 3b) zeigt die zugehörige Bildung der Stromabschnitte aus den Halbschwingungen des Stromes i. Spannungs- und Stromabschnitte des Wechselrichterbetriebes sind durch zusätzliche Punktierung gekennzeichnet. Die Ziffern im Spannungsdiagramm a) kennzeichnen Zeitbereiche, die den Schaltzuständen 1 bis 6 im rechten Teil der Fig. 3 entsprechen.

Diagramm c) kennzeichnet die Leitbereiche der Dioden, die in die Schalter S1-S4 integriert sind.

Die Diagramme d) und e) geben die in dem synchronisierten Schaltraster SR liegenden möglichen Leitbereiche der steuerbaren Halbleiterschalter S1-S4 an und zwar Diagramm d) für den Gleichrichterbetrieb und Diagramm e) für den Wechselrichterbetrieb. Die umrandeten Leitbereiche kennzeichnen den Winkel- oder Zeitbereich, in dem die zugeordneten Schalter S1-S4 in den leitenden Zustand gesteuert sind. Für den Gleichrichterbetrieb und für den Wechselrichterbetrieb sind jeweils die Leitbereiche für drei Einstellungen des Aktuatorstromes, nämlich minimaler, mittlerer und maximaler Strom dargestellt. Zwischen den Leitbereichen der Halbleiterschalter S1 und S3, bzw. S2 und S4, die bezüglich der Aktuatorspannung $u_A$ in Reihe geschaltet sind, befindet sich ein Lückenbereich $\Delta\varphi_L$, in dem die in Reihe liegenden Schalterpaare stets gleichzeitig sperren und die zu den Schaltern parallelgeschalteten Beschaltungskondensatoren $C_B$, wie weiter unten näher erläutert wird, umgeladen werden. Zur Einstellung des zu übertragenden Aktuatorstromes behält in jedem Betriebszustand ein in Reihe liegendes Schalterpaar S1 und S3 oder S2 und S4 die Phasenlage seiner Leitbereiche zu dem eingeprägten Strom i bei, während die Leitbereiche des jeweils anderen Schalterpaares zwischen der Minimalstellung SXMIN, in der der minimale Strom übertragen wird, und der Maximalstellung SXMAX mit maximaler Stromübertragung in Rasterschritten $\Delta t$ verschoben werden.

Bei der erfindungsgemäßen Aktuatorstelleinrichtung 4 haben die Leitbereiche in allen Betriebszuständen eine solche Phasenlage, dass der eingeprägte Strom i bei seinem Nulldurchgang entweder von einer Diode auf den bereits eingeschalteten parallelliegenden Schalter übergeht oder nach Umladen der Beschaltungskondensatoren $C_B$ über die Diode des in Reihe liegenden Schalters weiterfließt. Dadurch sind Einschaltverluste der steuerbaren Halbleiterschalter vermieden.

Am Ende eines Leitbereiches wird der leitende Schalter abgeschaltet, der Strom i lädt dann die parallelliegenden Beschaltungskondensatoren $C_B$ um und fließt danach ebenfalls über die Diode des in Reihe geschalteten Schalters weiter. Das Abschalten muss bei einem Winkel $\Delta\varphi_A$ soweit vor dem nächsten Stromnulldurchgang erfolgen, dass der Strom i ausreicht, in dem auf das Abschalten folgenden Lückenbereich $\Delta\varphi_L$ die zu den Schaltern parallelliegenden Beschaltungskondensatoren $C_B$ um den Betrag der Aktuatorspannung $u_A$ umzuladen.

Beim Übergang des Stromes von einer Diode auf den parallelliegenden steuerbaren Schalter tritt außer der niedrigen Durchlassspannung keine zusätzliche Spannung auf. Auch beim Abschalten eines Schalters, wenn der Strom von diesem auf die parallelliegenden Kondensatoren übergeht, ist die Spannung an dem Schalter zunächst Null und steigt dann, nachdem der Schalter sperrt, mit einer durch den Kapazitätswert der parallelliegenden Kondensatoren gegebenen Steilheit

$$\frac{du}{dt} = \frac{i}{2C_B}$$

an. Die Schaltverluste der steuerbaren Schalter sind bei diesen Schaltvorgängen nahezu Null. Dieser Stromübergang ist, wie an Hand der Diagramme und Schaltzustände der Fig. 3 näher gezeigt wird, im Gleich- und Wechselrichterbetrieb identisch.

In dem Zustand 1 fließt der eingeprägte Strom i im Kurzschluss über die eingeschalteten Schalter S1 und S2. Dem durch eine Gleichspannungsquelle mit der Spannung $U_A$ vereinfacht dargestellten Aktuator wird dabei kein Strom zugeführt. Der Zustand 2 beginnt mit dem Öffnen des Schalters S2 am Ende des Leitbereiches von S2 im Diagramm d). Der Strom i fließt nun im Zustand 2 über die zu den Schaltern S2 und S4 parallelliegenden Beschaltungskondensatoren. Wegen der Gleichheit der Kondensatoren fließt über jeden Kondensator der Strom i/2 und nur der Strom des zu S4 parallel liegenden Kondensators fließt über die Gleichspannungsquelle $U_A$. Der Umladezustand 2 ist beendet und geht in den Zustand 3 über, wenn der zu S2 parallel liegende Kondensator $C_B$ auf die Spannung $U_A$ aufgeladen und der zu S4 parallel liegende Kondensator $C_B$ völlig entladen ist. Im Zustand 3 fließt der Strom i zunächst über den Schalter S1 und die zu dem Schalter S4 parallelliegende Diode sowie über den Aktuator entgegen der Spannung $U_A$. Es liegt Gleichrichterbetrieb mit Leistungsfluss von der Wechselstromseite zu der Gleichspannungsseite vor. Nach Ablauf des Lückenbereiches $\Delta\varphi_L$ wird der spannungslose Schalter S4 geschlossen.

Diagramm a) zeigt in Zuordnung zum Strom i die zugehörige Spannung u am Eingang der Brückenschaltung und Diagramm b) den entsprechenden Abschnitt aus einer Halbschwingung des Stromes i.

Es ist aus den Diagrammen a), b) und d) zu ersehen, dass durch eine voreilende Verschiebung der Leitbereiche von S2 und S4 nach links aus der mit S2MIN und S4MIN gekennzeichneten Grundstellung, wie durch Pfeile G angedeutet, die dem Aktuator zugeführten Stromabschnitte vergrößert werden, bis annähernd die gesamte Halbschwingung dem Aktuator zugeführt wird. Beim Zurückverschieben der Leitbereiche nach rechts werden die Stromabschnitte bis auf den Winkel $\Delta\varphi_A$ reduziert. Der Winkel $\Delta\varphi_A$ ist der Winkelabstand der rechten Grenzen der Leitbereiche von S2MIN und S4MIN von dem nachfolgenden Stromnulldurchgang und muss etwas größer sein als der gleichzeitig beginnende Lückenbereich $\Delta\varphi_L$, damit die Umladung der zu S2 und S4 parallelliegenden Kondensatoren $C_B$ vor dem Schließen des Schalters S4 und vor dem nächsten Nulldurchgang des Stromes i abgeschlossen ist. Das Schließen des Schalters S4 nach dem Umladen der Beschaltungskondensatoren und vor dem Nulldurchgang des Stromes i erfolgt spannungslos, weit in diesem Bereich die zu S4 parallelliegende Diode leitet.

Im Gleichrichterbetrieb werden, wie die in ihrer Grundstellung verbleibenden Leitbereiche S10 und S30 der Schalter S1 und S3 in Diagramm d) zeigen, mit jedem Nulldurchgang die Schalter S1 bzw. S3 geöffnet. Dabei geht der Zustand 3 nach dem Stromnulldurchgang und nach dem Öffnen des Schalters S1 in den Zustand 5 über, in dem nun der zu Schalter S1 parallel liegende

Kondensator auf die Spannung $U_A$ aufgeladen und der zu Schalter S3 parallel liegende Kondensator entladen werden. Ist letzterer entladen, übernimmt die parallel liegende Diode den Strom und der Schalter S3 wird nach dem Lückenbereich $\Delta\varphi_L$ geschlossen. Der eingeprägte Strom i fließt nun im Bereich 6 im Kurzschluss über den Schalter S3 und die parallel liegende Diode sowie den Schalter S4. Der in der negativen Halbschwingung des Stromes i liegende Bereich 6 entspricht dem Bereich 1 in der positiven Halbschwingung.

Wie Diagramm e) zeigt, haben die Leitbereiche aller Schalter in der Grundstellung des Gleichrichterbetriebes und in der Grundstellung des Wechselrichterbetriebes die gleiche Phasenlage zum eingeprägten Strom i. Die Grundstellung des Wechselrichterbetriebes ist somit die Grundstellung des Gleichrichterbetriebes. Der Wechselrichterbetrieb wird dadurch realisiert, dass nun die Leitbereiche der Schalter S2 und S4 in ihrer Grundstellung S20 und S40 verbleiben und die Phasenlage der Leitbereiche der Schalter S1 und S3 aus ihrer Grundsstellung heraus nach rechts nacheilend verschoben werden. Dadurch bleibt am Ende des Bereiches 3 nach dem Nulldurchgang des Stromes i der Schalter S1 weiter geschlossen. Der Bereich 3 geht unter Beibehaltung der Schalterstellungen mit dem Stromnulldurchgang in Bereich 4 des Wechselrichterbetriebes über. Dabei ändert sich die Energieflussrichtung, der Aktuator wird entladen und die Energie dem Wechselstromkreis zugeführt. Der Übergang von dem Gleichrichterbetrieb zum Wechselrichterbetrieb erfolgt durch Verlängern des Schalterzustandes 3 über den Stromnulldurchgang hinaus, ohne dass in dem durch Punktierung gekennzeichneten Bereich 4 ein zusätzlicher Schaltvorgang erforderlich ist. Je nach der Größe der durch Pfeile W gekennzeichneten Verschiebung der Leitbereiche der Schalter S1 und S3 gegenüber dem Grundzustand S1 MIN = S10 und S3MIN = S30 wird der Entladestrom $i_A$ des Aktuators eingestellt. Beim Abschalten des Schalters S1 am Ende des Leitbereiches erfolgt der Übergang zu dem bereits beschriebenen Zustand 5. Bei symmetrischer Lage der Umladezustände 2 und 5 zum Nulldurchgang wird dem Aktuator im Wechselrichterbetrieb in den Bereichen 4 und 5 genau soviel Ladung und Energie entzogen wie ihm in der Halbschwingung zuvor im Gleichrichterbetrieb in den Bereichen 2 und 3 zugeführt wurde, d.h. in dieser Stellung der Leitbereiche ist der Mittelwert des Ladungstransportes und des Energieflusses Null.

Die Aktatorstelleinrichtung 4 hat, wie die Diagramme a) bis e) und die Schaltzustände 1 bis 6 zeigen, in jeder Halbschwingung des eingeprägten höherfrequenten Wechselstromes i nacheinander eine Phase des Betriebszustandes "Wechselrichterbetrieb" mit dem Ladungs- und Energietransport vom Aktuator 5, 5a zur Wechselstromseite, eine Phase des Betriebszustandes "Leerlauf" mit kurzgeschlossenem Wechselstromeingang und ohne Änderung des Ladungs- und Energiezustandes des Aktuators und eine Phase des Betriebszustandes "Gleichrichterbetrieb" mit Ladungs- und Energietransport von der Wechselstromseite zum Aktuator 5, 5a. Die Phase des "Wechselrichterbetriebes" beginnt mit jedem Nulldurchgang des Stromes i automatisch, wenn während der vor dem Stromnulldurchgang liegenden Phase des "Gleichrichterbetriebes" die zu den leitenden Dioden parallelliegenden steuerbaren Leistungshalbleiter eingeschaltet wurden. Die Phase des " Wechselrichterbetriebes" kann zu jedem beliebigen Zeitpunkt innerhalb der aktuellen Halbschwingung durch Abschalten eines der beiden in der "Wechselrichterphase" leitenden steuerbaren Leistungshalbleiter beendet werden. Die Aktuatorstelleinrichtung geht dann in die "Leerlaufphase". Durch Abschalten des weiteren in der "Leerlaufphase" noch leitenden steuerbaren Leistungshalbleiters wird dann die Phase des "Gleichrichterbetriebes" eingestellt. Dies muss mindestens bei einem Winkel $\Delta\varphi_A$ vor dem folgenden Nulldurchgang des Stromes i erfolgen, um die vollständige Umladung der Beschaltungskondensatoren $C_B$ in dem Lückenbereich $\Delta\varphi_L$ zu gewährleisten.

Der Übergang zwischen den Phasen der Betriebszustände erfolgt durch Abschaltvorgänge, bei denen keine Abschaltverluste auftreten. Die Größe und die Richtung des mittleren Ladungs- und Energietransportes über die Aktuatorstelleinrichtung wird durch die Dauer bzw. die Größe der Winkelbereiche der einzelnen Phasen bestimmt und im Gleichrichterbetrieb über die voreilende Verschiebung "G" der Schalter S2, S4 gegenüber der Grundstellung S2MIN=S20 sowie S4MIN=S40 und im Wechselrichterbetrieb über die nacheilende Verschiebung "W" der Schalter S1, S3 gegenüber der Grundstellung S1 MIN=S10 sowie S3MIN=S30 eingestellt.

Die Schaltungsanordnung nach den Figuren 1 und 2 ermöglicht nur die Einstellung von Aktuatorspannungen $u_A$ eines Vorzeichens, d. h. die Ausgangsleitung B kann gegenüber der Ausgangsleitung A nur positv gepolt sein. Für bestimmte Aktuatoren werden jedoch Aktuatorstelleinrichtungen 4 mit postiver und negativer Ausgangsspannung benötigt. Eine Aktuatorstelleinrichtung 4, die diese Forderung erfüllt, ist in Fig. 5 dargestellt. Sie unterscheidet sich von der Aktuatorstelleinrichtung 4 der Fig. 2 dadurch, dass in dem Stelleinrichtung 4c an Stelle der Halbleiterschalter S1, S2, S3, S4 der Schaltung 4a, die nur Spannung einer Polarität sperren und Strom einer Richtung ein- und ausschalten können, Halbleiterschalter verwendet werden, die Spannungen beider Polaritäten sperren und Ströme in beiden Richtungen ein- und ausschalten können. Derartige bidirektionale Halbleiterschalter bestehen beispielsweise, wie in Fig. 4c und Fig. 5 gezeigt, aus einem Paar gegensinnig in Reihe geschalteter steuerbarer Halbleiterschalter S1P/S3N, S2P/S4N, S3P/S1N, S4P/S2N.

Die Wirkungsweise einer Aktuatorstelleinrichtung 4 für bidirektionale Ausgangsspannungen wird an Hand der in Fig. 4 gezeigten Stelleinrichtungen 4a) bis 4c) erläutert. In Fig. 4a) ist noch einmal die Stelleinrichtung für positive Ausgangsspannung $u'_A$der in Fig. 2 gezeigten Aktuatorstelleeinrichtung 4 dargestellt. Zur Bildung einer negativen Ausgangsspannung $u'_A$ müssen die steuerbaren Halbleiterschalter bezogen auf die Ausgangsleitungen A,B' nach dem in Fig. 4b) gezeigten Schema angeordnet sein. Zur Unterscheidung der Halbleiterschalter in beiden Anordnungen haben die Schalter S1-S4 in der Anordnung für positive Ausgangsspannung zusätzlich die Kennung "P" und in der Anordnung für negative Ausgangsspannung zusätzlich die Kennung "N" erhalten. Die Ziffern 1-4 kennzeichnen in beiden Anordnungen Halbleiterschalter, die auf den Eingangsstrom i bezogen gleichphasig angesteuert werden. Die Schaltung 4c liefert eine positive Ausgangspannung, wenn die mit "N" bezeichneten Halbleiterschalter dauernd in den leitenden Zustand geschaltet sind und die mit "P" bezeichneten Halbleiterschalter in der an Hand der Figuren 2 und 3 beschriebenen Weise angesteuert werden. Beim Bilden einer negativen Ausgangsspannung $u'_A$ bleiben die mit "P" bezeichneten Halbleiterschalter dauernd in den leitenden Zustand gesteuert und die mit "N" bezeichneten Halbleiterschalter erhalten nun die Steuersignale, die beim Generieren einer positiven Ausgangsspannung den mit "P" bezeichneten Halbleiterschaltern mit der gleichen Kennziffer zugeführt werden. Die Umschaltung der Steuersignale erfolgt in der Steuerung $4_{ST}$ der Fig.5 in Abhängigkeit von dem Vorzeichen der Differenz $u_S$-$u_A$, wobei diese Vorzeicheninformation in der Information φ enthalten ist, beim Nulldurchgang der Ausgangsspannung des Aktuatorstellers, d. h. bei $u'_A$= 0.

Piezoelektrische Aktuatoren werden besonders vorteilhaft, wie Fig. 6 zeigt, mit 2 gegenphasig betriebenen Stapeln 5a, 5b aus piezoelektrischem Material ausgerüstet. Hierbei sind die beiden Piezostapel 5a und 5b bezüglich einer annähernd konstant gehaltenen Vorspannung $u_{AV}$ in Reihe und bezüglich einer zwischen dem Mittelpunktanschluss B und einem Außenleiteranschluss, beispielsweise A, angelegten Umladespannung $u_{AU}$ parallelgeschaltet. Mit einem derartigen Doppelaktuator werden größere Stellwege Δs1 +Δs2 und größere Stellkräfte erreicht als mit einem Aktuator, der nur einen Piezostapel aufweist. Bezüglich der Kapazität sind die beiden Stapel eines Doppelaktuators weitgehend gleich. Beim Einprägen eines Stromes $i_A$ über den Mittelleiter B fließt der Strom je zur Hälfte über die beiden Außenleiter A und C zurück. Dabei wird der obere Piezostapel 5b in Fig. 6 im Richtungssinn der Vorspannung $u_{AV}$ entladen und der untere Piezostapel 5a im Richtungssinn der Vorspannung $u_{AV}$ weiter aufgeladen, so dass bei dem oberen Stapel die durch die Ladung verursachte Dehnung zurückgeht und auf dem unteren Stapel die Dehnung zunimmt. Die Speisung eines derartigen Doppelaktuators kann beispielsweise durch zwei Aktuatorsteller erfolgen. Werden mehr als zwei Doppelaktuatoren mit gleichen Stellaufgaben angesteuert, so können diese ihre Vorspannung von einem gemeinsamen Aktuatorsteller erhalten.

Da die Vorspannung $u_{AV}$ von Doppelaktuatoren in der Regel konstant ist und nur die Umladespannung $u_{AU}$ zur Steuerung der Bewegung verändert wird, kann die Gleichvorspannung auch von einem nach dem Stand der Technik ausgebildeten Netzgerät erzeugt werden. Dieses Netzgerät muss jedoch in der Lage sein, bei annähernd konstanter Ausgangsspannung $u_{AV}$. den über die zusammengeschalteten Außenleiter $A_X$, $C_X$ fließenden Strom $\sum_{x=1}^{x=m} \frac{i_{Ax}}{2}$ von m Doppelaktuatoren zu liefern oder aufzunehmen. Diese Eigenschaft kann beispielsweise dadurch erreicht werden, dass die Ausgangskapazität des Netzgerätes wesentlich größer als die Kapazität der Doppelaktuatoren bemessen wird.

Das Beispiel der Fig. 7 weist 2 Gruppen mit je 2 Doppelaktuatoren auf. Jede der beiden Aktuatorgruppen hat eine eigene Vorspannungsstelleinrichtung 4.2 bzw. 4.5. Diesen werden die im allgemeinen konstanten Vorspannungssollwerte VSS2 und VSS5 zugeführt. Die Aktuatorstelleinrichtungen 4.1 und 4.3 der ersten Gruppe bzw. die Aktuatorstelleinrichtungen 4.4 und 4.6 der zweiten Gruppe stellen durch die Ströme $i_{A1}$, $i_{A3}$ bzw. die Ströme $i_{A4}$, $i_{A6}$ die Spannungen $U_{AU1}$, $U_{AU3}$ bzw. $U_{AU4}$, $u_{AU6}$ und damit die Ladungen und die Längenänderungen der Doppelaktuatoren nach den Spannungssollwerten $U_{S1}$, $U_{S3}$, bzw. $U_{S4}$, $U_{S6}$, ein. Diese Spannungssollwerte werden entsprechend dem in Fig. 1 und entsprechend der Fig 7 dargestellten Ausführungsbeispiel in einem Leitsystem LS als bitserielle Datenworte generiert, mittels einer nach dem Stand der Technik ausgebildeten Datenübertragungseinrichtung DÜ über die Trennstelle 3c übertragen und auf dem bewegbaren Teilsystem mittels eines Datenwandlers DW in die für die Aktuatorstelleinrichtungen 4.1, 4.3, bzw. 4.4, 4.6 geeigneten Sollwerte gewandelt und den Stelleinrichtungen zugeführt.

Die Zufuhr des eingeprägten Stromes i' zu jeder der Aktuatorstelleinrichtungen 4.1, 4.3, 4.4, 4.6 und der Vorspannungsstelleinrichtungen 4.2 und 4.5 erfolgt über die Sekundärwicklungen von Eingangstransformatoren 7.1, 7.2, 7.3, 7.4, 7.5 und 7.6 deren Primärwicklungen in Reihe geschaltet sind und durch den eingeprägten Strom i aus der Sekundärwicklung 3b des die Trennstelle überbrückenden Transformators 3 gespeist werden. Die Primärwicklung 3a dieses Transformators wird entsprechend der Anordnungen von Fig. 1 und Fig. 2 von dem Frequenzgenerator 2 mit einem höherfrequenten Wechselstrom $i_G$ konstanter Amplitude gespeist. Ist keine zu überbrückende Trennstelle vorhanden, speist der Frequenzgenerator 2 seinen Ausgangsstrom $i_G$ direkt in die in Reihe geschalteten Primärwicklungen der Eingangstransformatoren 7.1 - 7.6 ein. Durch diese Eingangstransformatoren wird auf ihrer Sekundärseite Potentialfreiheit und Stromanpassung an die Stelleinrichtungen 4.1 - 4.6 und an die Aktuatoren erreicht. Die Ausgänge der potentialfreien Stelleinrichtungen können daher miteinander verbunden sein und ein gemeinsames Massepotential haben. Die Eingangspannungen $u'_1$ bis $u'_6$ der Stelleinrichtungen 4.1 - 4.6 in Fig. 7 entsprechen der Eingangspannung $u'_G$ der Stelleinrichtung 4 in Fig. 1 und Fig. 2. Die über die Transformatoren 7.1 -7.6 in Fig.7 von den Eingängen der Stelleinrichtungen auf die Reihenschaltung der Primärwicklungen übertragenen Spannungen $u'_{G1}$ bis $u'_{G6}$ addieren sich in dem höherfrequenten Zwischenstromkreis HFZK, der aus den in Reihe geschalteten Primärwicklungen der Eingangstransformatoren 7.1 -7.6 und der Sekundärwicklung 3b des die Trennstelle 3c überbrückenden Übertragers besteht, zu der resultierenden Gesamtspannung $u'_G$.. Dabei gleichen sich entgegengesetzt gerichtete Leistungsflüsse in dem Zwischenstromkreis HFZK durch die Addition entgegengesetzt gerichteter Spannungen aus. Beispielsweise hat ein Leistungsfluss über die Aktuatorstelleinrichtung 4.1 zu dem angeschlossenen Aktuator eine im Sinne der Pfeilrichtung des Eingangsstromes i' positiv zu zählende Eingangsspannung $u'_1$ zur Folge. Von dem Aktuatorstrom $i_{A1}$ fließt die Hälfte, d. h. der Strom $i_{A1}/2$ über die Vorspannungsstelleinrichtung 4.2 zurück. Die Zuordnung des Stromes $i_{A1}/2$ zu der Vorspannung $u_{AV2}$ ergibt bei der Vorspannungsstelleinrichtung 4.2 einen Leistungsfluss von der Aktuatorseite zu dem höherfrequenten Zwischenstromkreis. Die zugehörige Eingangsspannung $u'_2$ ist dann der Eingangsspannung $u'_1$ entgegen gerichtet, wodurch die Gesamtleistung im Zwischenstromkreis HFZK reduziert wird. Über den Übertrager 3 wird daher nur die resultierende Gesamtleistung aller Aktuatoren übertragen.

Anhand der Figur 8 wird vereinfacht dargestellt, in welcher Weise eine oben beschriebene Vorrichtung und das zugehörige Verfahren unter Verwendung der Vorrichtung im Bereich der Rotorwelle GR und der Rotorblätter BL eines Drehflügelflugzeugs, insbesondere eines Hubschraubers zur Anwendung kommt. An Bord des Hubschrauber fest montiert sind die notwendigen elektronischen Bauteile, wie beispielsweise die Stromversorgung PS, und der Frequenzgenerator MFG mit der Steuerungselektronik CI, und auch die Verbindung zur Flugsteuerung STC des Hubschraubers.

An der Rotorwelle GR sind neben diversen Lagern BG verschiedene berührungslose Kopplungsvorrichtungen CD vorgesehen. Diese können einmal in der Art eines optischen Kopplers DÜ (vgl. Fig. 1) ausgeführt sein, wie dies im Fall der Signalübertragung STM von der im Leitsystem LS (vgl. Fig. 1) integrierten Steuerungselektronik CI zum Lichtwellenleiter OW angedeutet ist. Zum anderen sind berührungslose induktive Signalübertragungen 3 (vgl. Fig. 1) vorgesehen, die beispielsweise bei der Energieübertragung ETM vom Frequenzgenerator MFG zur Rotorkopfelektronik RHE Verwendung finden.

Bei der Übertragung der Signale des Azimut-Sensors AZS können beide Arten der Übertragung zur Anwendung kommen. Der Azimut-Sensor AZS dient dazu, Sollwertgrößen für die verschiedenen Aktuatoren in Abhängigkeit von der momentanen Position des jeweiligen Rotorblattes innerhalb eines Umlaufs zu erzeugen.

Im Bereich der Rotorwelle sind weitere Funktionseinheiten angedeutet, die nur in mittelbarem Zusammenhang mit der Erfindung stehen, wie die mechanische Rotorsteuerung RCM und die Rotorkopfsensoren RHS. Von der Rotorkopfelektronik RHE führen weitere elektrische Verbindungen in die Rotorblätter BL zu den Aktuatoren A, die die Ruderklappen FL bewegen, und zu den Sensoren S, die Lage der Ruderklappen FL detektieren. Die Ruderklappen stehen hier beispielhaft für verschiedene Ausführungsformen aerodynamisch wirksamer Einrichtungen an den Rotorblättern. Die Rotorelektronik RHE enthält somit die oben beschriebenen elektronischen Aktuatorstelleinrichtung 4 (vgl. Fig. 1, 2) und die weiteren zur Ansteuerung und Kontrolle der Aktuatoren A notwendigen elektronischen Schaltungen, wie beispielsweise den Datenwandler DW (vgl. Fig. 1).

Die Figur 9 zeigt schließlich eine Detaillösung bezüglich der berührungslosen induktiven Energieübertragung ETM, die in der Figur 8 nur schematisch vereinfacht dargestellt ist. Innerhalb einer statischen Rotorwellenlagerung SP ist die als Hohlwelle ausgeführte Rotorwelle RTG drehbar gelagert. Im Bereich der Drehachse der rotierenden Hohlwelle RTG sind der Lichtwellenleiter OW für die optische Datenübertragung und koaxial um diesen herum die beiden leitfähigen Metallrohre CMW angeordnet. Beide Leiter führen in Pfeilrichtung nach rechts zu der nicht dargestellten Rotorkopfelektronik RHE.

Die beiden leitfähigen Metallrohre CMW sind über die Verbindungsleitungen CC mit der gemeinsam mit der Rotorwelle rotierenden Wicklung $w_2$ (entsprechend 3b in Figur 1) elektrisch verbunden. Zusammen mit der statischen Wicklung $w_1$ (entsprechend 3a in Figur 1) bildet die rotierende Wicklung $w_2$ den berührungslosen Übertrager (entsprechend 3 in Figur 1). Die Zuleitungen zur stationären Wicklung $w_1$ sind in der Figur 9 nicht explizit dargestellt.

## Patentansprüche

1. Vorrichtung zur berührungslosen elektrischen Energieübertragung in einem System, wobei die Vorrichtung eine Kontrolleinrichtung (2a, 4S1-4S3, 4ST, 4R), mindestens ein stationäres und ein bewegbares Teil, zwischen denen Energie zu übertragen ist, mindestens einen zu steuernden und mit Energie zu versorgenden Aktuator (5) im bewegbaren Teil, wenigstens eine am zu versorgenden Aktuator (5) angeschlossene Aktuatorstelleinrichtung (4), einen einen Reihenschwingkreiskondensator ($C_G$) umfassenden Frequenzgnerator (2) an einen eine Trennstelle (3c) zwischen dem stationären Teil und dem bewegbaren Teil überbrückenden induktiven Übertrager

(3), dessen Primärwicklung (3a) am Reihenschwingkreiskondensator und dessen auf dem bewegbaren Teil angeordnete Sekundärwicklung (3b) die wenigstens eine Aktuatorstelleinrichtung (4) angeschlossen ist, umfasst **dadurch geknnzeichnet, dass** die wenigstens eine Aktuatorstelleinrichtung (4) in der Form einer Matrixanordnung (4a, 4b, 4c) von schaltbaren Leistungshalbleitern (S1,..., S4) ist, und dass das bewegliche Teil zumindesten eine Rotorachse (GR) und eien Rotorkopf eines Drehflügelflugzeugs umfasst, Teile der Kontrolleinrichtung am Rotorkopf angeordnet sind,
und dass am stationären Teil einer Rotorachsenlagerung (SP) zur Energieüberträgung die Primärwicklung (3a) angeordnet ist, welche mit der an der Rotorachse (GR) angeordneten Sekundärwicklung (3b) korrespondiert.

**2.** Vorrichtung nach Anspruch 1, **dadurch gekennzeichnet, dass** der zu steuernde und mit Energie zu versorgende Aktuator als kapazitiver Aktuator ausgeführt ist.

**3.** Vorrichtung nach Anspruch 1 oder 2, **dadurch gekennzeichnet, dass** in wenigstens einem Rotorblatt (BL) des Drehflügelflugzeugs einer oder mehrere kapazitive Aktuatoren angeordnet sind.

**4.** Vorrichtung nach Anspruch 1, **gekennzeichnet durch** folgende Merkmale:

a) zur Bildung einer Ausgangsspannung ($u'_A$, $u_A$) der Aktuatorstelleinrichtung (4) mit nur einer Polarität der Ausgangsleiter (A, B') enthält unipolare schaltbare Leistungshalbleiter (S1, ..., S4) in Matrixanordnung,
b) die unipolaren schaltbaren Leistungshalbleiter sind auf die Polarität der Ausgangsspannung bezogen eingesetzt, in der sie die Ausgangsspannung ($u'_A$, $u_A$) als Sperrspannung aufnehmen und den Strom ($-I_A$) vom positiven Ausgangsleiter zu einem Wechselstromeingang abschalten.

**5.** Vorrichtung nach Anspruch 1, **dadurch gekennzeichnet, dass** zur Bildung einer Ausgangsspannung ($u'_A$, $u_A$) der Aktuatorstelleinrichtung (4) mit wechselnder Polarität der Ausgangsleiter (A, B') bipolare schaltbare Leistungshalbleiter in Matrixanordnung aufweist, die wahlweise positive oder negative Spannungen sperren und Ströme in beiden Stromflussrichtungen abschalten.

**6.** Vorrichtung nach einem der Ansprüche 1, 4 oder 5, **gekennzeichnet durch** folgende Merkmale:

- die Aktuatorstelleinrichtung (4) weist Mittel zur Regelung ($4_R$) und zur Steuerung ($4_{ST}$) des Einprägens von positiven und negativen Halbschwingungen oder Abschnitten von Halbschwingungen des höherfrequenten Wechselstromes (i) in den Aktuator (5, 5a) auf,
- das Mittel zur Regelung ($4_R$) ist verbunden mit dem Mittel zur Steuerung ($4_{ST,}$), um über ein Signal (φ) in Abhängigkeit von dem Betrag des Unterschiedes ($u_S$-$u'_A$) zwischen dem Sollwert (us) und dem Istwert ($u'_A$) der Aktuatorspannung unterschiedlich große Abschnitte von Halbschwingungen des Stromes (i) zu bilden,
- das Mittel zur Regelung ($4_R$) ist verbunden mit dem Mittel zur Steuerung ($4_{ST}$), um über das Signal (G/W) in Abhängigkeit von dem Vorzeichen des Unterschiedes ($u_S$-$u'_A$) zwischen dem Sollwert ($u_S$) und dem Istwert ($u'_A$) der Aktuatorspannung, die Leistungshalbleiter (S1, S2, S3, S4) in der Weise zu steuern, wobei dem Aktuator (5, 5a) bei negativem Vorzeichen des Unterschiedes ($u_S$-$u'_A$) von Halbschwingung zu Halbschwingung sukzessive Ladung bzw. Energie entzogen und bei positivem Vorzeichen des Unterschiedes ($u_S$-$u'_A$) von Halbschwingung zu Halbschwingung sukzessive Ladung bzw. Energie zugeführt wird.

**7.** Vorrichtung nach einem der Ansprüche 1, 4 bis 6, **gekennzeichnet durch** folgende Merkmale:

a) das Mittel zur Steuerung ($4_{ST}$) des Einprägens von Halbschwingungen oder Abschnitten von Halbschwingungen des Wechselstromes (i) in den Aktuator ist Verbunden mit Einrichtungen ($4_{S1}$, $4_{S2}$, $4_{S3}$) zur Erzeugung von Signale (SR) eines zum Wechselstrom (i) synchronisierten Schaltrasters,
b) das Mittel zur Steuerung ($4_{ST}$) umfasst Logikmittel, welche aus Signalen (SR) des Schaltrasters Leitbereichssignale (S10, S30) und (S20, S40) der Grundstellung der in Reihe liegenden Halbleiterschalterpaare (S1,S3) und (S2, S4) bilden,
c) das Mittel zur Steuerung ($4_{ST}$) umfasst Mittel zur voreilenden Verschiebung der Leitbereiche des Schalterpaares (S2, S4) gegenüber der Grundstellung (S20, S40) im Gleichrichterbetrieb und umfasst Mittel zur nacheilenden Verschiebung der Leitbereiche des Schalterpaares (S1, S3) gegenüber der Grundstellung (S10, S30) im Wechselrichterbetrieb,
d) das Mittel zur Steuerung ($4_{ST}$) ist verbunden mit dem Mittel zur Regelung ($4_R$) zur Zuführung eines Signals (G/W) zur Einstellung der Richtung der Verschiebung und eines Signals (φ) zur Einstellung des Maßes der Verschiebung.

**8.** Vorrichtung nach Anspruch 1 oder 8, **dadurch gekennzeichnet, dass** im Bereich der Rotorachse ein

Azimut-Sensor (AZS) angeordnet ist, dessen Ausgang mit der Kontrolleinrichtung verbunden ist.

**9.** Vorrichtung nach einem der Ansprüche 2-8, **dadurch gekennzeichnet, dass** im Bereich des Rotorblatts wenigstens ein Sensor zur Erfassung der Position eines vom kapazitiven Aktuator betätigten aerodynamisch wirksamen Mittels angeordnet ist, dessen Ausgang mit der Kontrolleinrichtung verbunden ist.

**10.** Vorrichtung nach einem der Ansprüche 1 oder 8 bis 9, **dadurch gekennzeichnet, dass** die Aktuatorstelleinrichtung (4) und eine zugehörige Steuerelektronik (RHE) im Rotorkopf angeordnet sind und über in der Rotorachse angeordnete Leitungen dem Übertrager mit (CC) verbunden sind.

**11.** Verfahren zur berührungslosen elektrischen Energieübertragung in einem System, das mindestens ein stationäres und ein bewegbares Teil umfasst, wobei die Vorrichtung nach einem der Ansprüche 1, 4 bis 7 an das System angelegt wird, mit mittels der angelegten Vorrichtung durchgeführten folgenden Verfahrensschritten:

- in dem stationären Teil generiert der Frequenzgenerator (2) aus einer Gleichspannung (1) einen Wechselstrom ($i_G$) höherer Frequenz mit von der Phasenlage und der Amplitude der Gegenspannung ($u_G$) unabhängigen Amplitude,
- der Wechselstrom ($i_G$) wird der Primärwicklung (3a) des die Trennstelle überbrückenden induktiven übertragers (3) zugeführt,
- der von der Sekundärwicklung (3b) auf dem bewegbaren Teil ausgehende Wechselstrom (i) höherer Frequenz wird mittels der Aktuatorstelleinrichtung (4) getrennt nach positiven und negativen Halbschwingungen oder Abschnitten von diesen Halbschwingungen, stets in der Richtung in einen Aktuator (5) eingeprägt,

dass in jeder Halbschwingung eine Längenänderung ($\Delta$s) des Aktuators in der gewünschten Richtung auftritt.

## Claims

**1.** Device for contactless electrical power transmission in a system, the device comprising a control means (2a, $4_{S1}$-$4_{S3}$, $4_{ST}$, $4_R$), at least one stationary and one movable part between which power is to be transmitted, at least one actuator (5) to be controlled and supplied with power in the movable part, at least one actuator adjustment means (4) connected to the actuator (5) to be supplied, a frequency generator (2) having a series-resonant circuit capacitor ($C_G$), an inductive transformer (3), which bridges an isolating point (3c) between the stationary part and the movable part and of which the primary winding (3a) is arranged on the series-resonant circuit capacitor and the secondary winding (3b), arranged on the movable part, is connected to the at least one actuator adjustment means (4), **characterised in that** the at least one actuator adjustment means (4) is in the form of a matrix arrangement (4a, 4b, 4c) of switchable power semiconductors (S1, ..., S4), **in that** the movable part comprises at least a rotor shaft (GR) and a rotor head of a rotary-wing aircraft, **in that** parts of the control means are arranged on the rotor head, and **in that** the primary winding (3a), which corresponds to the secondary winding (3b) arranged on the rotor shaft (GR), is arranged on the stationary part of a rotor shaft bearing (SP) for power transmission.

**2.** Device according to claim 1, **characterised in that** the actuator to be controlled and supplied with power is configured as a capacitive actuator.

**3.** Device according to either claim 1 or claim 2, **characterised in that** one or more capacitive actuators are arranged in at least one rotor blade (BL) of the rotary-wing aircraft.

**4.** Device according to claim 1, **characterised by** the following features:

a) the output conductor (A, B') comprises unipolar switchable power semiconductors (S1, ..., S4) in a matrix arrangement to form an output voltage ($u'_A$, $u_A$) of the actuator adjustment means (4) with only one polarity,
b) the unipolar switchable power semiconductors are set on the basis of the polarity of the output voltage, in which they take up the output voltage ($u'_A$, $u_A$) as a blockage voltage and switch off the current ($-I_A$) from the positive output conductor to form an alternating current input.

**5.** Device according to claim 1, **characterised in that** the output conductor (A, B') comprises bipolar switchable power semiconductors in a matrix arrangement, which selectively block positive or negative voltages and switch off currents in the two current flow directions to form an output voltage ($u'_A$, $u_A$) of the actuator adjustment means (4) with an alternating polarity.

**6.** Device according to any one of claims 1, 4 and 5, **characterised by** the following features:

- the actuator adjustment means comprises means for regulating ($4_R$) and controlling ($4_{ST}$)

the impression of positive and negative half-waves or half-wave segments of the relatively high-frequency alternating current (i) on the actuator (5, 5a),
- the regulation means ($4_R$) is connected to the control means ($4_{ST}$) so as to form different-sized half-wave segments of the current (i) using a signal (φ) as a function of the difference ($u_S$-$u'_A$) between the target value ($u_S$) and the actual value ($u'_A$) of the actuator voltage,
- the regulation means ($4_R$) is connected to the control means ($4_{ST}$) so as to control the power semiconductors (S1, S2, S3, S4) using the signal (G/W) as a function of the sign of the difference ($u_S$-$u'_A$) between the set value ($u_S$) and the actual value ($u'_A$) of the actuator voltage, in such a way that when the sign of the difference ($u_S$-$u'_A$) is negative, a successive charge or power is withdrawn from the actuator (5, 5a) from one half-wave to the next, and when the polarity sign of the difference ($u_S$-$u'_A$) is positive, a successive charge or power is supplied to said actuator from one half-wave to the next.

**7.** Device according to any one of claims 1 and 4 to 6, **characterised by** the following features:

a) the control means ($4_{ST}$) for controlling the impression of half-waves or have-wave segments of the alternating current (i) on the actuator is connected to means ($4_{S1}$, $4_{S2}$, $4_{S3}$) for generating signals (SR) of a switching grid synchronised with the alternating current (i),
b) the control means ($4_{ST}$) comprises logic means which form, from signals (SR) of the switching grid, conductive region signals (S10, S30) and (S20, S40) of the initial position of the pairs (S1, S3) and (S2, S4) of switchable semiconductors connected in series,
c) the control means ($4_{ST}$) comprises means for advance shifting of the conductive regions of the switch pair (S2, S4) relative to the initial position (S20, S40) during rectifier operation and comprises means for delayed shifting of the conductive regions of the switch pair (S1, S3) relative to the initial position (S10, S30) during inverter operation,
d) the control means ($4_{ST}$) is connected to the regulation means ($4_R$) for supplying a signal (G/W) for setting the direction of the shift and a signal (φ) for setting the magnitude of the shift.

**8.** Device according to either claim 1 or claim 8, **characterised in that** an azimuth sensor (AZS) is arranged in the region of the rotor shaft, the output of said sensor being connected to the control means.

**9.** Device according to any one of claims 2 to 8, **characterised in that** at least one sensor for detecting the position of an aerodynamically active means actuated by the capacitive actuator is arranged in the region of the rotor blade, the output of said sensor being connected to the control means.

**10.** Device according to any one of claims 1, 8 or 9, **characterised in that** the actuator adjustment means (4) and an associated electronic control circuit (RHE) are arranged in the rotor head and are connected to the transformer (CC) via lines arranged in the rotor shaft.

**11.** Method for contactless electrical power transmission in a system which comprises at least one stationary and one movable part, the device according to any one of claims 1 and 4 to 7 being connected to the system, having the following method steps which are carried out by means of the attached device:

- in the stationary part, the frequency generator (2) generates from a direct voltage (1) a relatively high-frequency alternating current ($I_G$) having an amplitude independent of the phase angle and the amplitude of the reverse voltage ($u_G$);
- the alternating current ($I_G$) is supplied to the primary winding (3a) of the inductive transformer (3) which bridges the isolating point;
- the relatively high-frequency alternating current (i) coming from the secondary winding (3b) on the movable part is separated by the actuator adjustment means (4) into positive and negative half-waves or segments of these half-waves, always impressed on an actuator (5) in the direction such that a length change (Δs) of the actuator in the desired direction occurs in each half-wave.

## Revendications

**1.** Dispositif de transmission d'énergie électrique sans contact dans un système, le dispositif comprenant un dispositif de contrôle (2a, 4S1 - 4S3, 4ST, 4R), au moins une partie fixe et une partie mobile entre lesquelles l'énergie doit être transmise, au moins un actionneur (5) à commander et à alimenter en énergie dans la pièce mobile, au moins un dispositif de réglage (4) d'actionneur connecté à l'actionneur (5) à alimenter, un générateur de fréquence (2) comprenant un condensateur à circuit oscillant en série ($C_G$), sur un transformateur inductif (3) pontant un point de sectionnement (3c) entre la pièce fixe et la pièce mobile, dont l'enroulement primaire (3a) est connecté au condensateur à circuit oscillant en série et dont l'enroulement secondaire (3b) disposé sur la pièce mobile est connecté à le au moins un dispositif

de réglage d'actionneur (4), **caractérisé en ce que** le au moins un dispositif de réglage d'actionneur (4) est sous la forme d'un agencement matriciel (4a, 4b, 4c) de semi-conducteurs de puissance commutables (S1,..., S4), **en ce que** la partie mobile comprend au moins un axe de rotor (GR) et une tête de rotor d'un giravion, les pièces du dispositif de contrôle étant disposées sur la tête de rotor,
et **en ce que** l'enroulement primaire (3a) est disposé sur la partie fixe d'un palier d'axe de rotor (SP) pour transmettre l'énergie, lequel enroulement primaire correspond à l'enroulement secondaire (3b) disposé sur l'axe du rotor (GR).

**2.** Dispositif selon la revendication 1, **caractérisé en ce que** l'actionneur à commander et à alimenter en énergie est construit sous forme d'actionneur capacitif.

**3.** Dispositif selon la revendication 1 ou 2, **caractérisé en ce qu'**un ou plusieurs actionneurs capacitifs sont disposés dans au moins une pâle de rotor (BL) du giravion.

**4.** Dispositif selon la revendication 1, **caractérisé par** les caractéristiques suivantes :

a) pour former une tension de sortie ($u'_A$, $u_A$) du dispositif de réglage d'actionneur (4) avec une seule polarité, le conducteur de sortie (A, B') contient des semi-conducteurs de puissance commutables unipolaires (S1, .... S4) en agencement matriciel,
b) les semi-conducteurs commutables unipolaires sont mis en oeuvre en se rapportant à la polarité de la tension de sortie, dans laquelle ils captent la tension de sortie ($u'_A$, $u_A$) en tant que tension de blocage et coupent le courant ($-I_A$) du conducteur de sortie positif allant vers une entrée de courant alternatif.

**5.** Dispositif selon la revendication 1, **caractérisé en ce que**, pour former une tension de sortie ($u'_A$, $u_A$) du dispositif de réglage d'actionneur (4) de polarité changeante, le conducteur de sortie (A, B') comprend des semi-conducteurs de puissance commutables bipolaires en agencement matriciel, qui bloquent des tensions facultativement positives ou négatives et coupent des courants dans les deux sens du flux de courant.

**6.** Dispositif selon l'une des revendications 1, 4 ou 5, **caractérisé par** les caractéristiques suivantes :

- le dispositif de réglage d'actionneur (4) comporte un organe de régulation ($4_R$) et de commande ($4_{ST}$) d'application de semi-périodes positives ou négatives ou de segments de semi-périodes du courant alternatif (i) d'une fréquence supérieure dans l'actionneur (5, 5a),
- l'organe de régulation ($4_R$) est connecté à l'organe de commande ($4_{ST}$) pour former, par l'intermédiaire d'un signal (φ), en fonction du montant de la différence ($u_S$-$u'_A$) entre la valeur de consigne ($u_S$) et la valeur réelle ($u'_A$) de la tension de l'actionneur, des segments de grandeur différente de semi-périodes du courant (i),
- l'organe de régulation ($4_R$) est connecté à l'organe de commande ($4_{ST}$), pour commander, par l'intermédiaire du signal (GNV), en fonction du signe de la différence ($u_S$-$u'_A$) entre la valeur de consigne ($u_S$) et la valeur réelle ($u'_A$) de la tension d'actionneur, les semi-conducteurs de puissance (S1, S2, S3, S4) de manière à ce qu'en cas de signe négatif de la différence ($u_S$-$u'_A$), d'une semi-période à une autre semi-période, une charge ou de l'énergie successive pour l'actionneur est coupée (5, 5a) ou qu'en cas de signe positif de la différence ($u_S$-$u'_A$), d'une semi-période à une autre semi-période, une charge ou de l'énergie successive est alimentée à l'actionneur (5, 5a).

**7.** Dispositif selon l'une des revendications 1 et 4 à 6, **caractérisé par** les caractéristiques suivantes :

a) l'organe de commande ($4_{ST}$) d'application de semi-périodes ou de segments de semi-périodes du courant alternatif (i) dans l'actionneur est connecté à des dispositifs ($4_{S1}$, $4_{S2}$, $4_{S3}$) permettant de générer des signaux (SR) d'une grille de commutation synchronisée au courant alternatif (i),
b) l'organe de commande ($4_{ST}$) comprend des moyens logiques, qui forment à partir des signaux (SR) de la grille de commutation des signaux de plage conductrice (S10, S30) et (S20, S40) à l'état initial des paires de commutateurs à semi-conducteurs disposées en série (S1, S3) et (S2, S4).
c) l'organe de commande ($4_{ST}$) comprend des moyens de décalage avancé des plages conductrices de la paire de commutateurs (S2, S4) vis-à-vis de l'état initial (S20, S40), en fonctionnement de convertisseur alternatif-continu, et comprend des moyens de décalage de retard de phase des plages conductrices de la paire de commutateurs (S1, S3) vis-à-vis de l'état initial (S10, S30), en fonctionnement de convertisseur continu-alternatif,
d) l'organe de commande ($4_{ST}$) est connecté à l'organe de régulation ($4_R$) pour acheminer un signal (G/W) de réglage du sens de décalage et un signal (φ) de réglage de la grandeur du décalage.

**8.** Dispositif selon la revendication 1 ou 8, **caractérisé en ce qu'**un détecteur d'azimut (AZS) est disposé dans le domaine de l'axe du rotor, dont la sortie est connectée au dispositif de contrôle.

**9.** Dispositif selon l'une des revendications 2 ou 8[1], **caractérisé en ce qu'**au moins un détecteur permettant de détecter la position d'un organe aérodynamiquement actif actionné par l'actionneur capacitif est disposé dans le domaine de la pâle de rotor, dont la sortie est connectée au dispositif de contrôle.

**10.** Dispositif selon l'une des revendications 1, 8 ou 9, **caractérisé en ce que** le dispositif de réglage d'actionneur (4) et une électronique de commande correspondante (RHE) sont disposés dans la tête de rotor et sont connectés au transformateur par l'intermédiaire des lignes disposées dans l'axe du rotor.

**11.** Procédé de transmission d'énergie électrique sans contact dans un système, qui comprend au moins une pièce fixe et une pièce mobile, moyennant quoi le dispositif selon l'une des revendications 1, 4 à 7 est implanté dans le système, lequel procédé comprenant les étapes suivantes exécutées au moyen du dispositif implanté :

- dans le creux fixe, le générateur de fréquence (2) génère à partir d'une tension continue (1) un courant alternatif ($I_G$) de fréquence plus haute ayant une amplitude indépendante de la position de phase et de l'amplitude de la tension inverse ($U_G$),
- le courant alternatif ($I_G$) est amené à l'enroulement primaire (3a) du transformateur (3) inductif pontant le point de sectionnement,
- le courant alternatif (i) de fréquence plus haute partant de l'enroulement secondaire (3b) sur la pièce mobile est séparé au moyen du dispositif de réglage d'actionneur (4) selon les semi-périodes positives et négatives ou les segments de ces semi-périodes et est appliqué toujours dans un actionneur (5), dans une certaine direction, de telle sorte que dans chaque semi-période, une modification en longueur ($\Delta s$) de l'actionneur se produit dans la direction souhaitée.

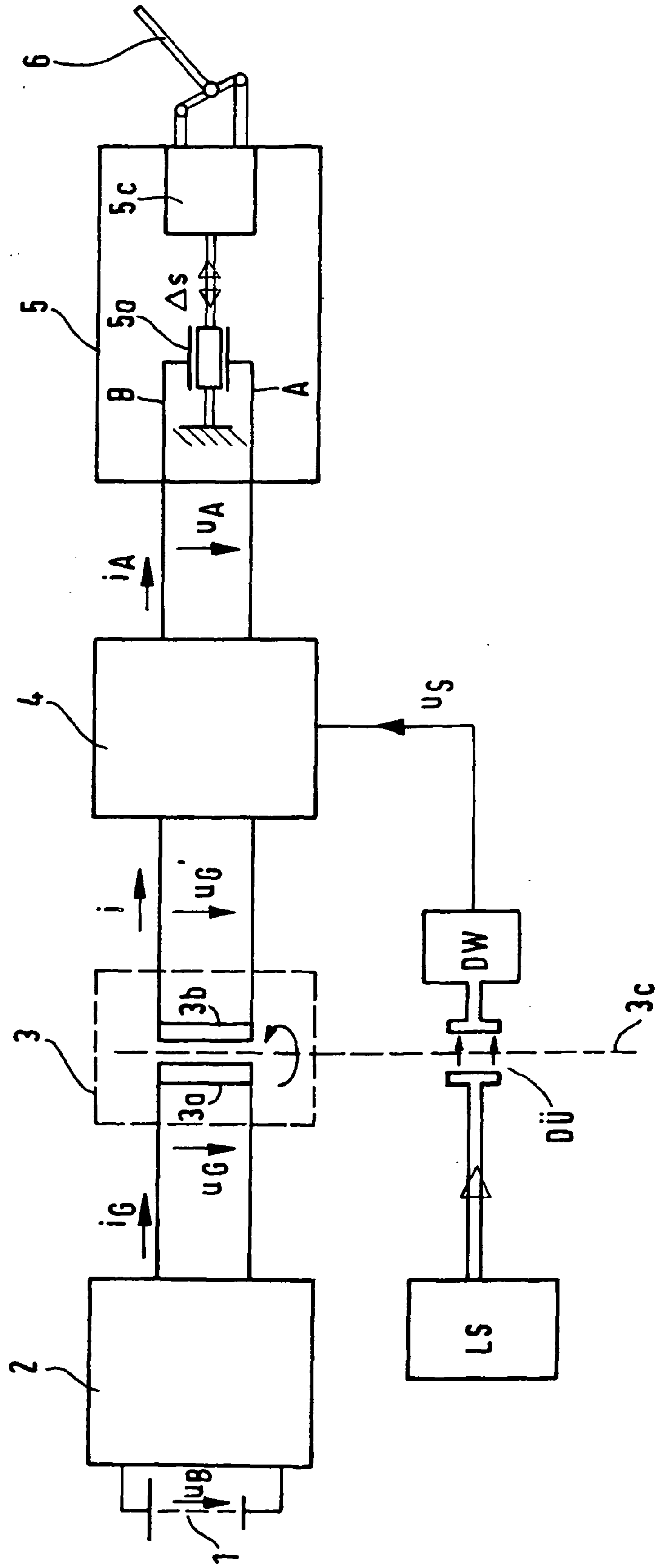


FIG.1

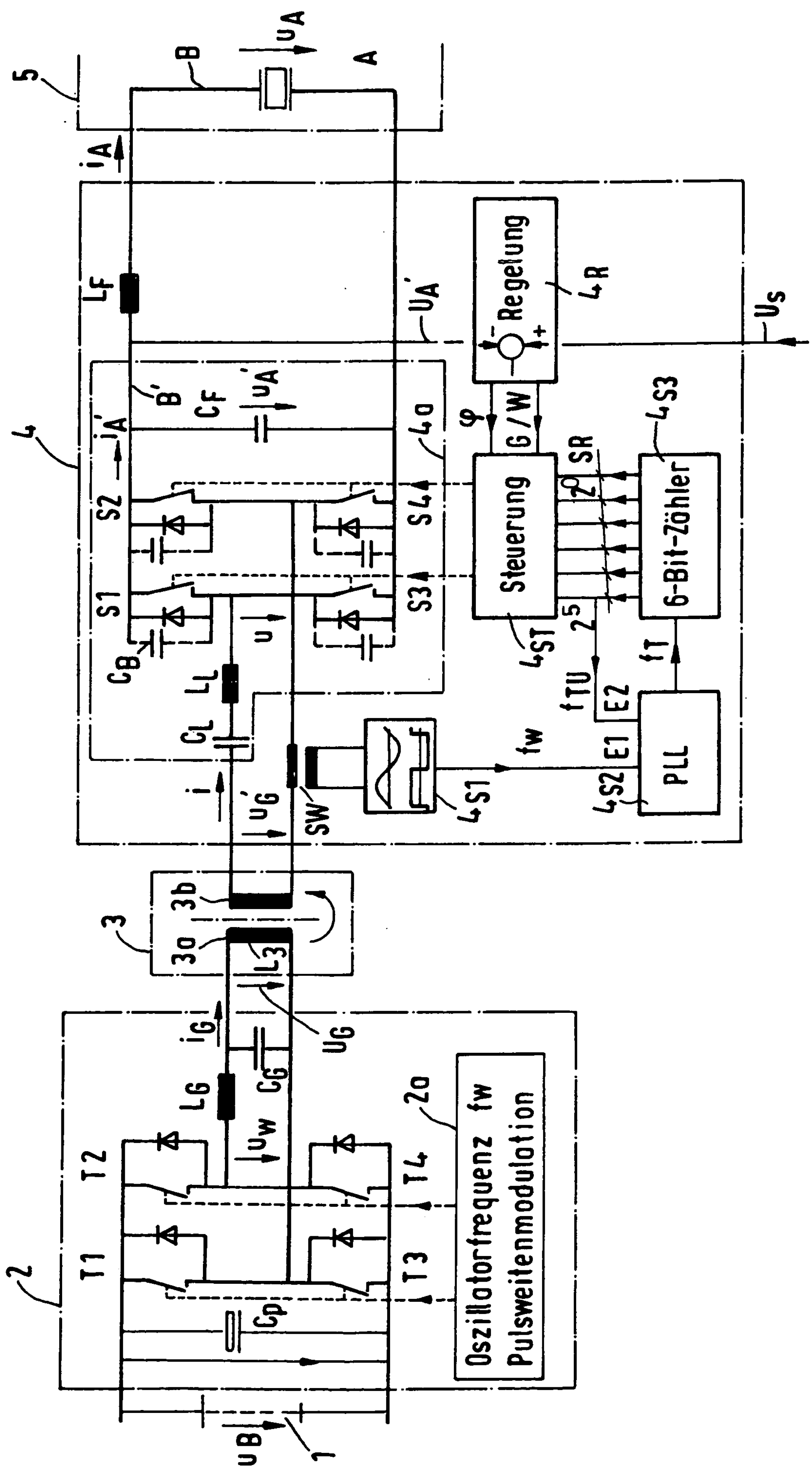
5
B
uA
A
iA
LF
uA'
Regelung
4R
Us
B'
CF
iA'
4
4a
S1
S2
S3
S4
CB
φ
G/W
Steuerung
4ST
2^0
SR
2^5
6-Bit-Zähler
4S3
fT
fTU
E2
E1
PLL
4S2
4S1
fw
LL
CL
i
u
u'G
SW
3
3a
3b
L3
iG
uG
LG
CG
uW
T1
T2
T3
T4
2
2a
Oszillatorfrequenz fw
Pulsweitenmodulation
Cp
uB
1

FIG. 2

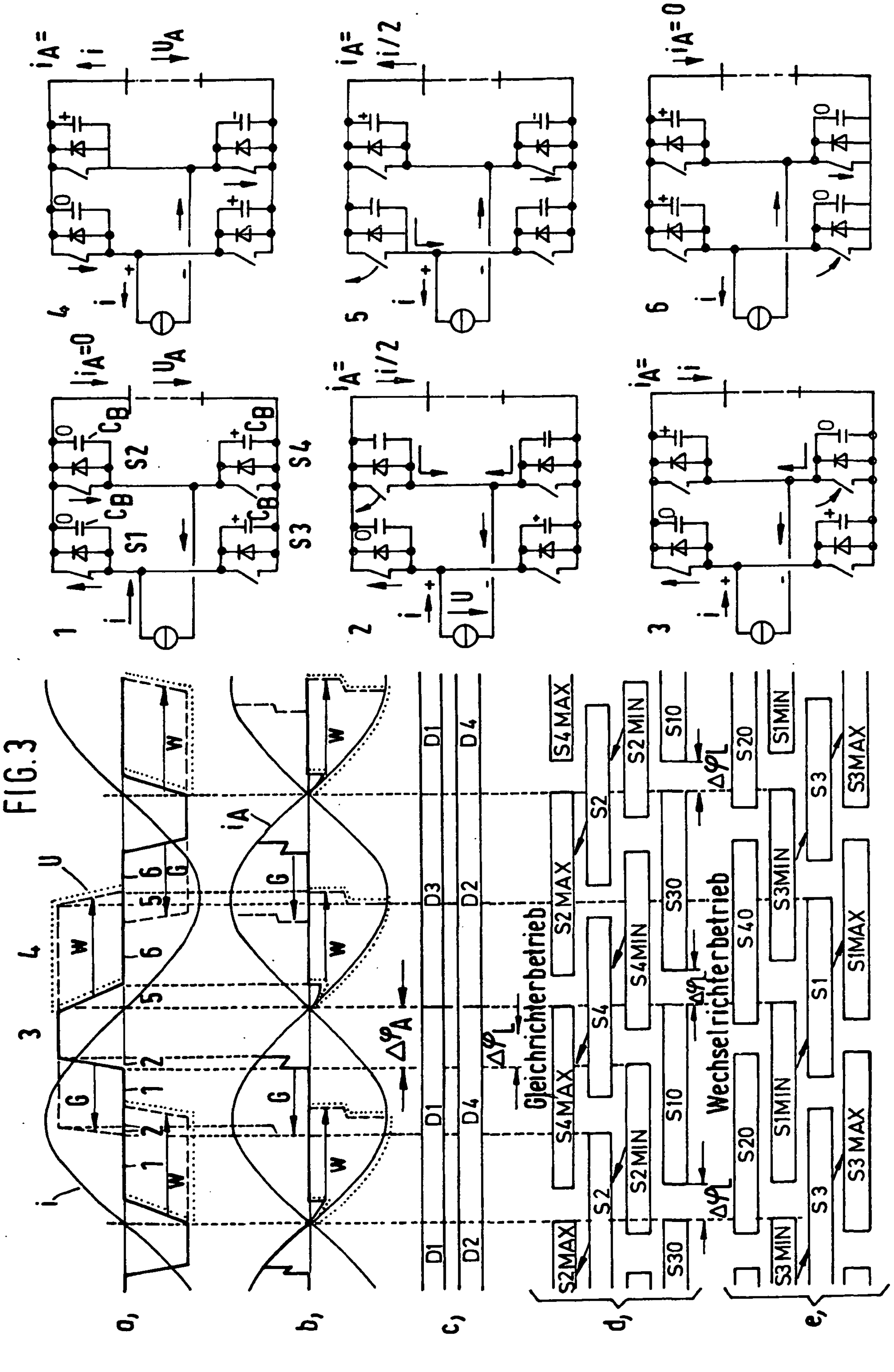
a,
b,
c,
d,
e,
Gleichrichterbetrieb
Wechselrichterbetrieb
S1
S2
S3
S4
$C_B$
$i_A=0$
$U_A$
$i/2$
D1
D2
D3
D4
S2MAX
S4MAX
S2MIN
S4MIN
S10
S20
S30
S40
S1MIN
S3MIN
S1MAX
S3MAX
$\Delta\varphi_A$
$\Delta\varphi_L$

FIG.3

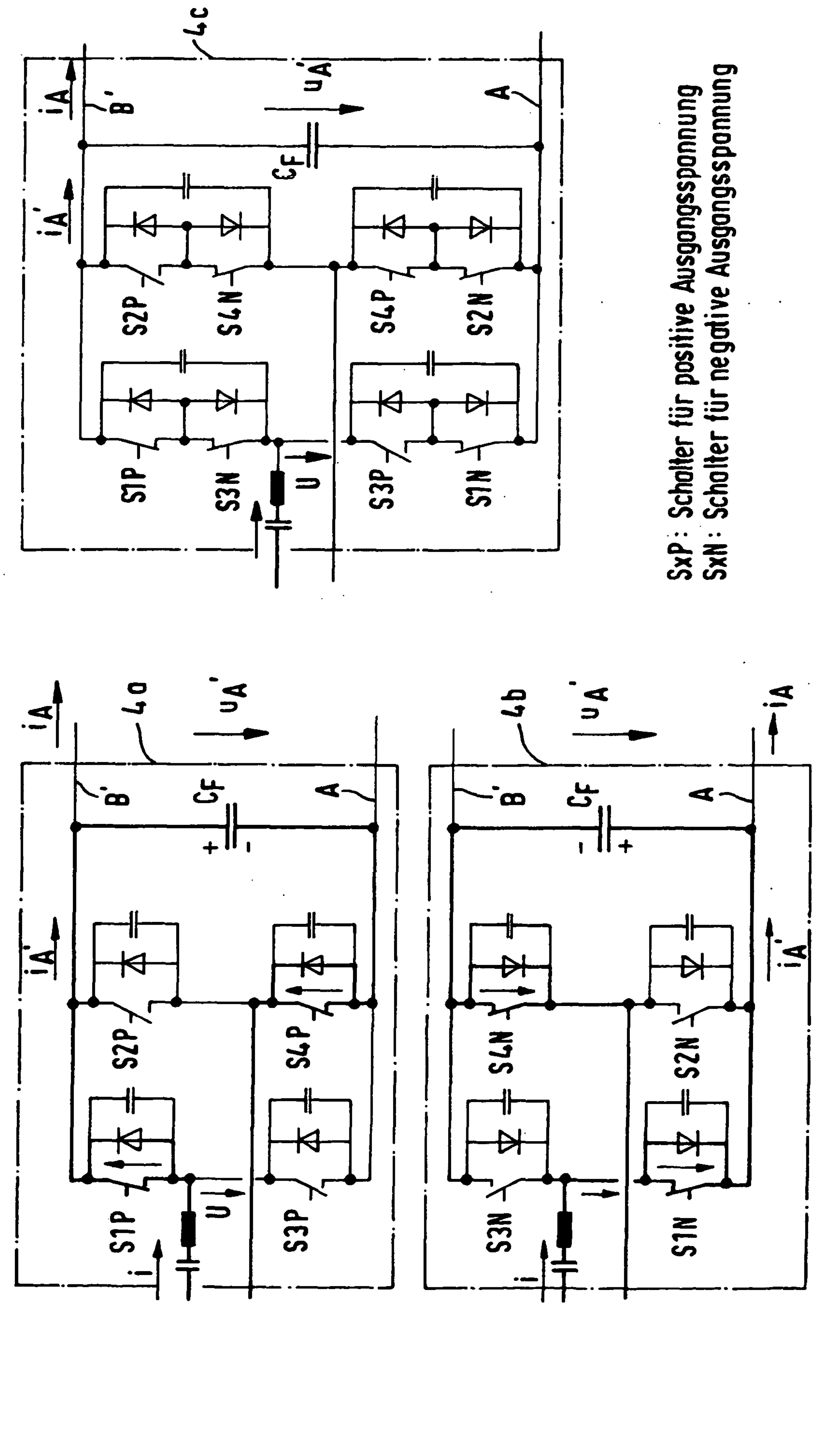
4c
4a
4b
S1P
S2P
S3P
S4P
S1N
S2N
S3N
S4N
CF
A
B'
SxP : Schalter für positive Ausgangsspannung
SxN : Schalter für negative Ausgangsspannung

FIG.4

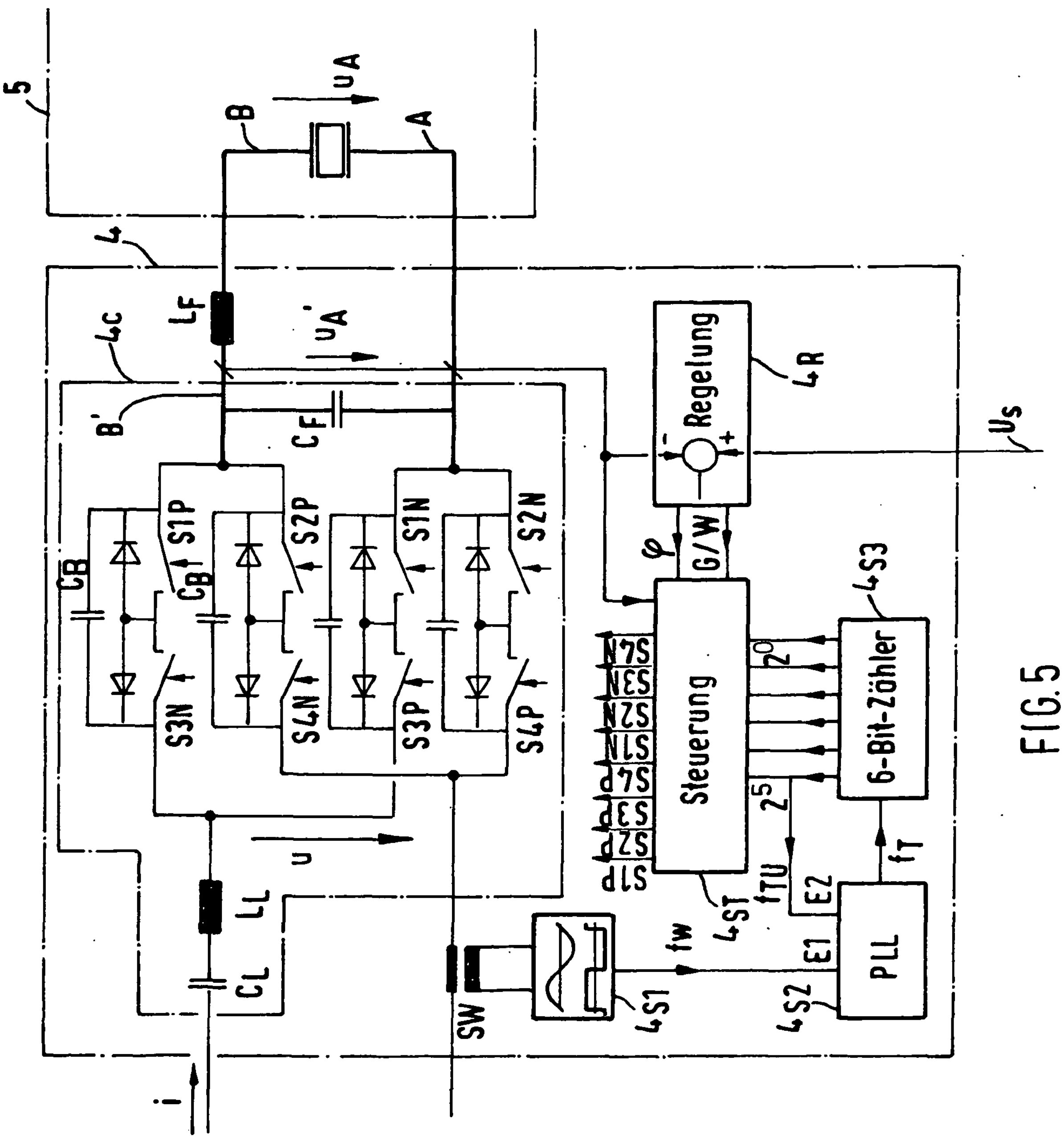
5
B
A
uA
4
4c
LF
uA'
B'
CF
CB
S1P
S2P
S1N
S2N
S3N
S4N
S3P
S4P
u
LL
CL
i
SW
4R
Regelung
Us
φ
G/W
Steuerung
4ST
S1P
S2P
S3P
S4P
S1N
S2N
S3N
S4N
2^5
2^0
6-Bit-Zähler
4S3
fTU
E2
E1
PLL
fT
fW
4S1
4S2

FIG. 5

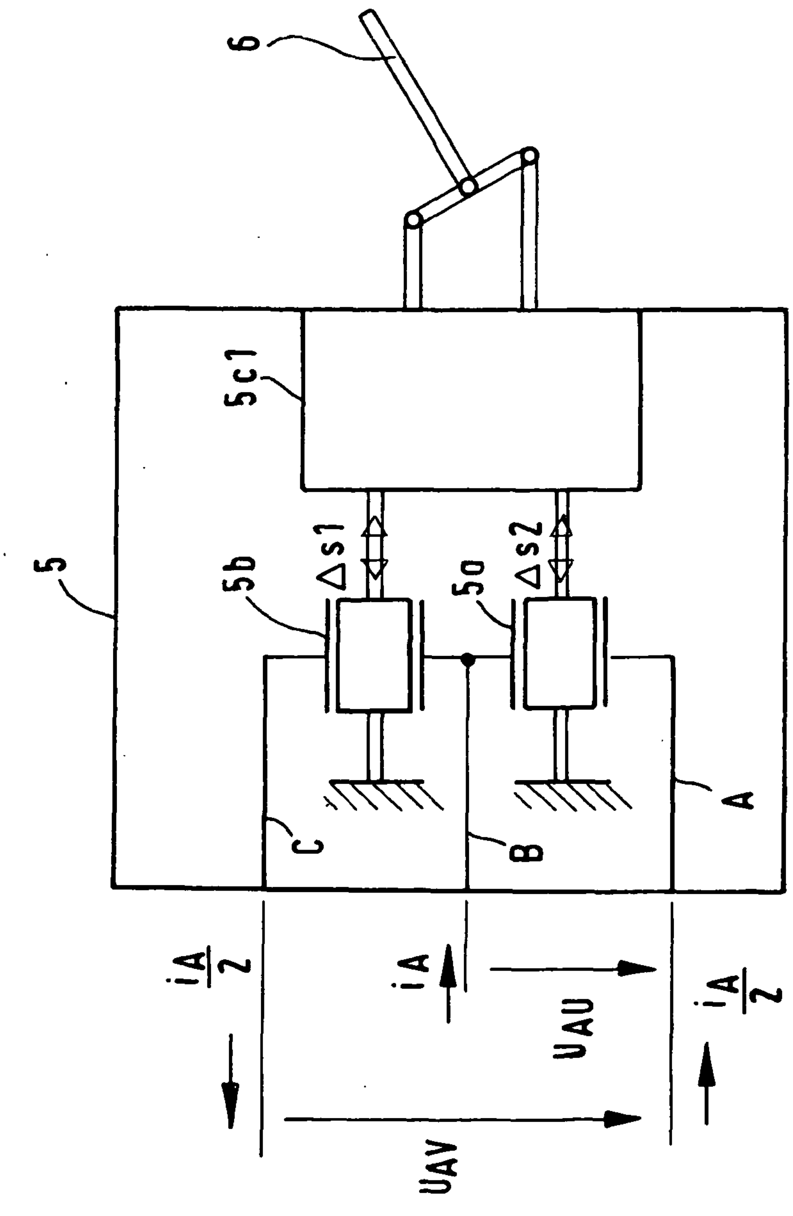


FIG.6

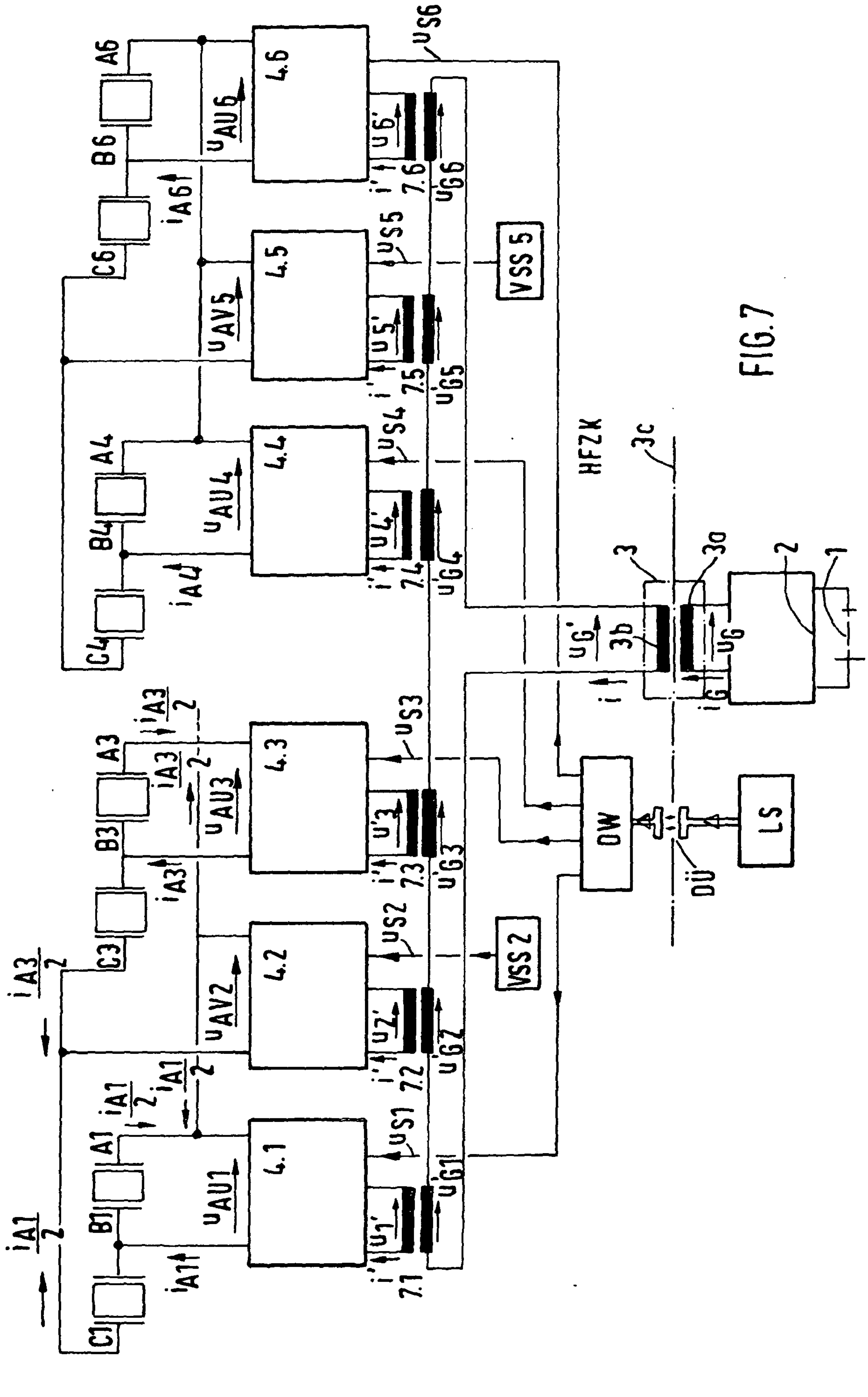


FIG. 7

FIG. 8

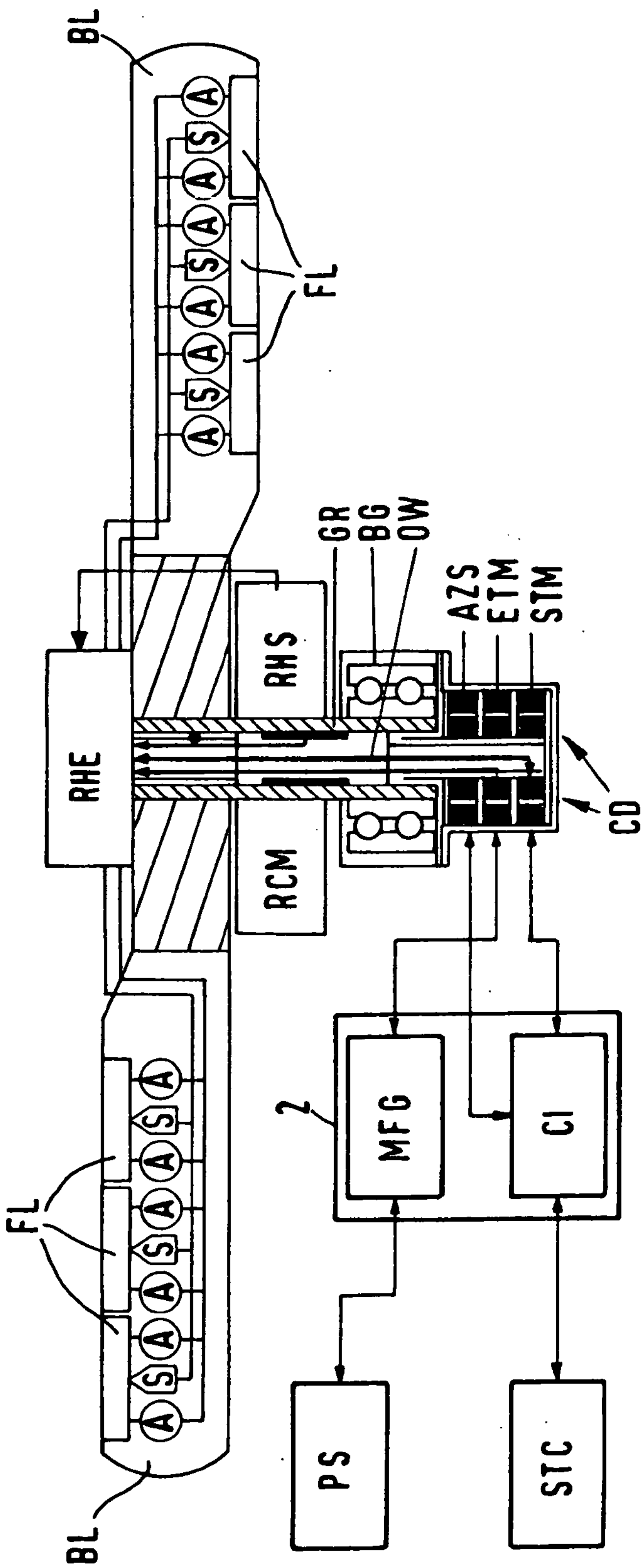

FIG.9

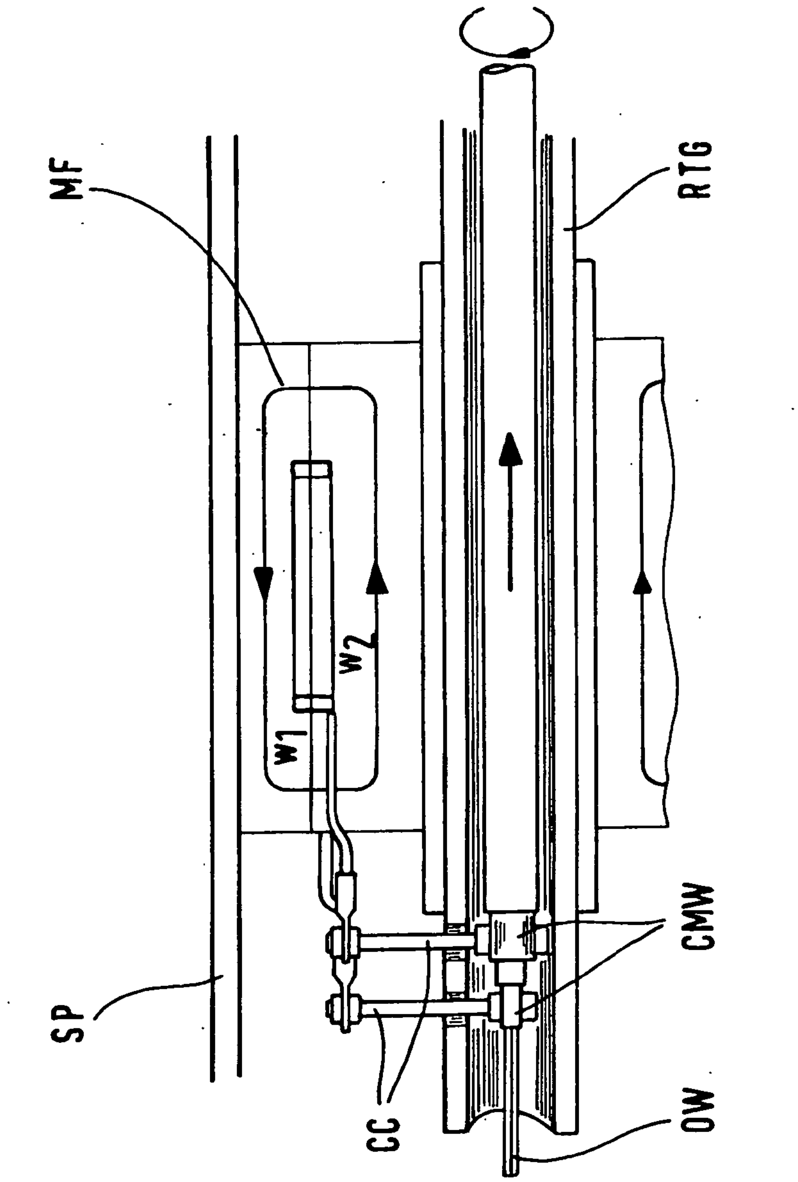

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19927087 A1
- WO 0048299 A
- US 5709291 A


### In der Beschreibung aufgeführte Nicht-Patentliteratur


- **A. Esser.** A New Approach to Synchronize a Bidirektional DC to DC Converter for Contactless Power Supplies. *ETEP,* Marz 1993, vol. 3 (2